# EUROPEAN PATENT SPECIFICATION

(11) **EP 4 071 205 B1**
(45) Date of publication and mention of the grant of the patent: **11.02.2026**
(21) Application number: 20896658.0
(22) Date of filing: 25.11.2020
(51) Int. Cl.: C08K 5/5313, C08K 5/5373, C08K 5/5399, C08L 13/00, C08L 77/00, C08L 83/10, C08L 101/02, C08G 63/692, C08G 69/14, C08L 77/02, C08L 83/04, C08K 5/00, C08K 5/3492

(54) **POLYAMIDE RESIN COMPOSITION**
POLYAMIDHARZZUSAMMENSETZUNG
COMPOSITION DE RÉSINE DE POLYAMIDE

(30) Priority: 04.12.2019 JP 2019219649; 27.03.2020 JP 2020058505; 27.03.2020 JP 2020058570
(43) Date of publication of application: 12.10.2022
(73) Proprietor: UBE Corporation, Ube-shi, Yamaguchi 755-8633 (JP)
(72) Inventor: TSUBOI Kazutoshi, Ube-shi, Yamaguchi 755-8633 (JP); NAKAO Yukiko, Ube-shi, Yamaguchi 755-8633 (JP); KUSUMOTO Takaaki, Ube-shi, Yamaguchi 755-8633 (JP); SHIROTANI Karin, Ube-shi, Yamaguchi 755-8633 (JP)
(74) Representative: Hoffmann Eitle
(86) International application number: PCT/JP2020/043773
(87) International publication number: WO 2021/111937

(56) References cited:
- WO-A1-2009/037859
- WO-A1-2012/152805
- CN-A- 109 021 557
- JP-A- 2005 350 501
- JP-A- 2012 025 954
- US-A1- 2018 072 873

## Description

### Technical Field

The present invention relates to a polyamide resin composition.

### Background Art

In recent years, there is a growing demand for flame retardant materials in order to prevent fire or the spread of fire in fields such as industrial and consumer appliances, and electric products. Synthetic resins are highly combustible. Polyamide resins are more flame retardant than other resins such as polyolefin resins, but are still incapable of satisfying the high level of flame retardancy required in recent years. Materials have been then invented that are imparted with high flame retardancy by adding a flame retardant to polyamide resins.

For example, a fiber-reinforced polyamide resin with high flame retardancy and glow wire resistance has been suggested that is based on polyamide 66 and includes phosphorus-containing and nitrogen-containing flame retardants (see Patent Literature 1).

Also suggested is a fiber-reinforced polyamide resin that includes an aliphatic polyamide, a partly aromatic polyamide, and a phosphorus-containing flameproofing agent (see Patent Literature 2). Only fiber-reinforced resins are described in Patent Literatures 1 and 2 as the resins. The polyamide resins disclosed in Patent Literatures 1 and 2 are unsuitable for the production of flexible parts.

A polyamide resin composition including a halogen-free flame retardant has also been suggested (see Patent Literature 3). The intended application of Patent Literature 3 is to rigid molded body, and all the resin compositions intended in Patent Literature 3 are fiber-reinforced polyamide resins.

On the other hand, a flame-retardant, non-reinforced polyamide resin has been suggested that is a polyamide shaping composition based on polyamide 12 and a polyamide elastomer and including a flame retardant and a plasticizer (see Patent Literature 4).

Patent Literature 5 describes a flame-retardation polyamide composite material comprising 65 to 80 parts by mass of a polyamide resin, 0 to 25 parts by mass of an ABS resin, 5 to 20 parts by mass of a flame retardant, 1 to 10 parts by mass of a tin powder, 0 to 10 parts by mass of a compatibilizer, 0 to 15 parts by mass of a reinforcing filler and 1 to 10 parts by mass of an additive.

Patent Literature 6 describes a flame-retardant thermoplastic molding composition comprising from 30 to 95 mass% of at least one aliphatic polyamide or copolyamide, as component A, from 1 to 15 mass% of at least one cyclic phenoxyphosphazene having at least 3 phenoxyphosphazene units, as component B, from 3 to 20 mass% of at least one (di)phosphinate salt, as component C, from 1 to 15 mass% of at least one reaction product of melamine with a phosphorus acid, as component D, from 0 to 5 mass% of at least one metal borate, as component E, from 0 to 20 mass% of at least one impact-modifying polymer, as component F, from 0 to 50 mass% of glass fibers, as component G, and from 0 to 30 mass% of further additives, as component H, where the total amount of components A to H gives 100 mass%.

Patent Literature 7 describes a flame-retardant polyamide composition comprising 1 to 96 mass% of one or more thermoplastic polyamides, 2 to 25 mass% of a dialkylphosphinic salt of the formula (I), and/or of a diphosphinic salt of the formula (II), and/or of polymers thereof, 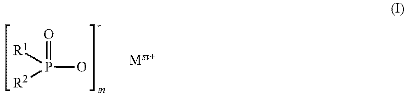 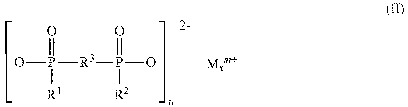 in which R¹ and R² are identical or different and are linear or branched C₁-C₆-alkyl, or H; R³ is linear or branched C₁-C₁₀-alkylene, C₆-C₁₀-arylene, C₇-C₂₀-alkylarylene, or C₇-C₂₀-arylalkylene; M is Mg, Ca, Al, Sb, Sn, Ge, Ti, Zn, Fe, Zr, Ce, Bi, Sr, Mn, Li, Na, K and/or a protonated nitrogen base; m is 1 to 4; n is 1 to 4; x is 1 to 4, 1 to 20 mass% of a salt of phosphorous acid, 1 to 20 mass% of a phosphazene, 0 to 50 mass% of filler or reinforcing agent, 0 to 1 mass% of a phosphonite or of a mixture of a phosphonite and a phosphite, and 0 to 1 mass% of an ester or salt of long-chain aliphatic carboxylic acids (fatty acids), which typically have chain lengths of C₁₄ to C₄₀, the sum of the components being 100 mass%.

Patent Literature 8 describes a flame-retardant polyamide composition containing 2 to 80 mass% of a specific polyamide, 5 to 30 mass% of a phosphinate compound and 0.01 to 10 mass% of a phosphazene compound.

Patent Literature 9 describes a non-halogen flame-retardant polyamide resin composition comprising 0.05 to 2.0 mass% of a coupling agent based on 100 mass% of a composition comprising 30 to 80 mass% of a polyamide resin, 5 to 40 mass% of a composite flame retardant containing a metal salt of phosphinic acid and a nitrogen-containing phosphoric acid-based compound, and 0 to 60 mass% of an inorganic reinforcement.

Patent Literature 10 describes a flame-retardant halogen-free polyamide molding composition comprising (A) 62 to 87 mass% of a partially aromatic, partially crystalline copolyamide having a melting point of 270°C to 320°C and made up of 100 mass% of diacid fraction composed of: 50 to 100 mass% of terephthalic acid (TPA) and/or naphthalenedicarboxylic acid; 0 to 50 mass% of isophthalic acid (IPA), and 100 mass% of diamine fraction composed of at least one diamine selected from the group consisting of: butanediamine, pentanediamine, hexanediamine, octanediamine, methyloctanediamine, nonanediamine, decanediamine, undecanediamine and dodecanediamine; (B) 5 to 15 mass% of ionomer; (C) 8 to 18 mass% of flame retardants; (D) 0 to 5 mass% of additives; where the components (A) to (D) add up to 100 mass%.

### Citation List

### Patent Literature

Patent Literature 1: Japanese Patent Application Kokai Publication No. 2007-70627
Patent Literature 2: Japanese Patent Kohyo Publication No. 2007-507566
Patent Literature 3: Japanese Patent Kohyo Publication No. 2004-510863
Patent Literature 4: Japanese Patent Application Kokai Publication No. 2017-43762
Patent Literature 5: CN 109 021 557 A
Patent Literature 6: WO 2012/152805 A1
Patent Literature 7: US 2018/072873 A1
Patent Literature 8: WO 2009/037859 A1
Patent Literature 9: JP 2005-350501 A
Patent Literature 10: JP 2012-025954 A

### Disclosure of Invention

### Technical Problem

Patent Literature 4 contains a description about the oxygen index, but does not disclose any technical data on results of a UL combustion test, which is an important index of flame retardancy. An object of the present invention is therefore to provide a polyamide resin composition that has excellent mechanical properties and shows excellent results in a UL94 combustion test.

### Solution to Problem

The present inventors made extensive studies directed to achieving the above object, and have consequently found that a polyamide resin composition including a phosphinic acid salt and specific proportions of an aliphatic polyamide and a phosphazene compound exhibits mechanical properties and shows excellent results in a UL94 combustion test.

Specifically, the present invention pertains to a polyamide resin composition, a molded body and a hollow molded body as defined in the claims.

### Advantageous Effects of Invention

The polyamide resin compositions provided according to the present invention have excellent mechanical properties and show excellent results in a UL94 combustion test.

### Description of Embodiments

### [Polyamide resin compositions]

A polyamide resin composition comprising an aliphatic polyamide (A), a phosphinic acid salt (B) and a phosphazene compound (C), wherein the aliphatic polyamide (A) is an aliphatic polyamide having a ratio of the number of methylene groups to the number of amide groups of 5.0 or more, the aliphatic polyamide (A) is contained in an amount of 60 mass% or more and 79 mass% or less based on 100 mass% of the polyamide resin composition, the phosphinic acid salt (B) is contained in an amount of 16 mass% or more and 20 mass% or less based on 100 mass% of the polyamide resin composition, the phosphazene compound (C) is contained in an amount of 5 mass% or more and 20 mass% or less based on 100 mass% of the polyamide resin composition, and the phosphazene compound (C) is a cyclic phosphazene compound.

### [Aliphatic polyamides (A)]

The aliphatic polyamide (A) comprises an aliphatic homopolyamide resin and/or an aliphatic copolymerized polyamide resin.

### (Aliphatic homopolyamide resins)

The term "aliphatic homopolyamide resin" means an aliphatic polyamide resin composed of a single monomer component. The aliphatic homopolyamide resin may comprise at least one of a lactam and an aminocarboxylic acid that is a hydrolyzate of a lactam, or may comprise a combination of a single aliphatic diamine and a single aliphatic dicarboxylic acid. When the aliphatic polyamide resin is composed of a combination of monomer components consisting of an aliphatic diamine and an aliphatic dicarboxylic acid, the combination of a single aliphatic diamine and a single aliphatic dicarboxylic acid is regarded as a single monomer component.

Examples of the aliphatic homopolyamide resins include aliphatic homopolyamide resins composed of an aliphatic diamine and an aliphatic dicarboxylic acid, and aliphatic homopolyamide resins composed of a lactam or an aminocarboxylic acid.

For example, the monomer component constituting the aliphatic homopolyamide resin may be a combination of an aliphatic diamine having 2 to 20 carbon atoms, preferably 4 to 12 carbon atoms, more preferably 6 to 12 carbon atoms, with an aliphatic dicarboxylic acid having 2 to 20 carbon atoms, preferably 6 to 12 carbon atoms, more preferably 10 to 12 carbon atoms, or may be a lactam or an aminocarboxylic acid each having 6 to 12 carbon atoms, preferably 11 or 12 carbon atoms.

Examples of the aliphatic diamines include ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine and 2,2,4/2,4,4-trimethylhexamethylenediamine. Examples of the aliphatic dicarboxylic acids include oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid and eicosanedioic acid.

Examples of the lactams include ε-caprolactam, enantholactam, undecanelactam, dodecanelactam, α-pyrrolidone and α-piperidone. Examples of the aminocarboxylic acids include 6-aminocaproic acid, 7-aminoheptanoic acid, 9-aminononanoic acid, 11-aminoundecanoic acid and 12-aminododecanoic acid.

Examples of the aliphatic homopolyamide resins include polyamide 6, polyamide 11, polyamide 12, polyamide 48, polyamide 49, polyamide 410, polyamide 412, polyamide 58, polyamide 59, polyamide 510, polyamide 512, polyamide 66, polyamide 68, polyamide 69, polyamide 610, polyamide 612, polyamide 614, polyamide 616, polyamide 618, polyamide 96, polyamide 98, polyamide 99, polyamide 910, polyamide 912, polyamide 106, polyamide 108, polyamide 109, polyamide 1010, polyamide 1012, polyamide 126, polyamide 128, polyamide 129, polyamide 1210 and polyamide 1212.

### (Aliphatic copolymerized polyamide resins)

The term "aliphatic copolymerized polyamide resin" means an aliphatic polyamide resin composed of a combination of two or more kinds of monomer components. The aliphatic copolymerized polyamide resin is a copolymer of two or more selected from the group consisting of combinations of an aliphatic diamine and an aliphatic dicarboxylic acid, lactams, and aminocarboxylic acids. Here, each combination of an aliphatic diamine and an aliphatic dicarboxylic acid is regarded as a single monomer combining a single aliphatic diamine and a single aliphatic dicarboxylic acid.

Examples of the aliphatic diamines include those described as the raw materials of the aliphatic homopolyamide resins.

Examples of the aliphatic dicarboxylic acids include those described as the raw materials of the aliphatic homopolyamide resins.

Examples of the lactams include those described as the raw materials of the aliphatic homopolyamide resins. Examples of the aminocarboxylic acids include those described as the raw materials of the aliphatic homopolyamide resins.

The aliphatic diamines, the aliphatic dicarboxylic acids, the lactams and the aminocarboxylic acids each may be used singly, or two or more may be used in combination.

The aliphatic copolymerized polyamide resins may be one kind or a combination of two or more kinds.

### (Preferred embodiments of aliphatic polyamides (A))

From the points of view of mechanical properties (tensile elongation at break) and extrusion shaping properties, the aliphatic polyamide (A) has a ratio [CH₂]/[NHCO] of the number of methylene groups ([CH₂]) to the number of amide groups ([NHCO]) (hereinafter, the ratio of the number of methylene groups to the number of amide groups is sometimes written as [CH₂]/[NHCO]) of 5.0 or more, preferably 5.0 or more and 15.0 or less, particularly preferably 7.0 or more and 13.0 or less.

Examples of the aliphatic polyamides (A) having a ratio [CH₂]/[NHCO] of the number of methylene groups to the number of amide groups of 5.0 or more and 15.0 or less include polyamide 6: [CH₂]/[NHCO] = 5.0, polyamide 11: [CH₂]/[NHCO] = 10.0, polyamide 12: [CH₂]/[NHCO] = 11.0, polyamide 66: [CH₂]/[NHCO] = 5.0, polyamide 610: [CH₂]/[NHCO] = 7.0, polyamide 612: [CH₂]/[NHCO] = 8.0, polyamide 614: [CH₂]/[NHCO] = 9.0, polyamide 616: [CH₂]/[NHCO] = 10.0, polyamide 618: [CH₂]/[NHCO] = 11.0, polyamide 810: [CH₂]/[NHCO] = 8.0, polyamide 812: [CH₂]/[NHCO] = 9.0, polyamide 99: [CH₂]/[NHCO] = 8.0, polyamide 910: [CH₂]/[NHCO] = 8.5, polyamide 912: [CH₂]/[NHCO] = 9.5, polyamide 108: [CH₂]/[NHCO] = 8.0, polyamide 109: [CH₂]/[NHCO] = 8.5, polyamide 1010: [CH₂]/[NHCO] = 9.0, polyamide 1012: [CH₂]/[NHCO] = 10.0, polyamide 126: [CH₂]/[NHCO] = 8.0, polyamide 128: [CH₂]/[NHCO] = 9.0, polyamide 129: [CH₂]/[NHCO] = 9.5, polyamide 1210: [CH₂]/[NHCO] = 10.0, and polyamide 1212: [CH₂]/[NHCO] = 11.0.

From the points of view of mechanical properties and extrusion shaping properties, the aliphatic polyamide (A) preferably comprises at least one homopolymer selected from the group consisting of polyamide 11, polyamide 12, polyamide 612, polyamide 1010, polyamide 1012 and polyamide 1212, and/or at least one copolymer formed using two or more kinds of raw material monomers for the above homopolymers.

From the points of view of mechanical properties, extrusion shaping properties and chemical resistance, the aliphatic polyamide (A) more preferably comprises polyamide 12 and/or polyamide 11, and particularly preferably consists solely of polyamide 12 and/or polyamide 11.

The aliphatic polyamides (A) may be one kind or a combination of two or more kinds.

From the points of view of mechanical properties and extrusion shaping properties, the aliphatic polyamide (A) is preferably such that the relative viscosity of a solution of 1 g of the aliphatic polyamide (A) in 100 ml of 96% sulfuric acid as measured at 25°C in accordance with JIS K 6920 is 1.5 or more and 3.5 or less, and more preferably 2.0 or more and 3.0 or less.

When the aliphatic polyamide (A) comprises two or more kinds of polyamide resins having different relative viscosities, the relative viscosity of the aliphatic polyamide (A) is preferably measured as described above. When, however, the relative viscosities of the respective polyamide resins, and the mixing ratio of the resins are known, the relative viscosity of the aliphatic polyamide (A) may be the average value determined by multiplying the respective relative viscosities by the mixing ratio and combining the products.

### (Production of polyamide resins)

A production device for the polyamide resin include a known polyamide production device such as a batch reaction vessel, a single-tank or multi-tank continuous reactor, a tubular continuous reactor, or a kneading reaction extruder such as a single-screw kneading extruder or a twin-screw kneading extruder. The polymerization method may be a known method such as melt polymerization, solution polymerization or solid-phase polymerization. The polymerization may be performed while repeating pressure control to atmospheric pressure, reduced pressure and increased pressure. These polymerization methods may be performed singly or may be appropriately combined.

### [Phosphinic acid salts (B)]

The phosphinic acid salt (B) is a component that imparts flame retardancy to the polyamide resin composition.

Examples of the phosphinic acid salts (B) include phosphinic acid metal salts of the formula (1) below, phosphinic acid metal salts of the formula (2) below, and/or polymers thereof, and onium salts such as ammonium salts and phosphonium salts. Specific examples of the onium salts of phosphinic acids include those described in WO 2008/117666.

The phosphinic acid salt (B) is preferably a phosphinic acid metal salt, and particularly preferably a phosphinic acid metal salt of the formula (1) below, a phosphinic acid metal salt of the formula (2) below, and/or a polymer thereof.

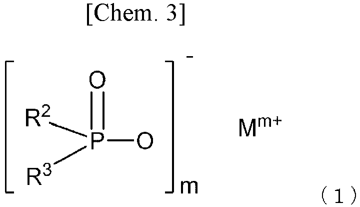

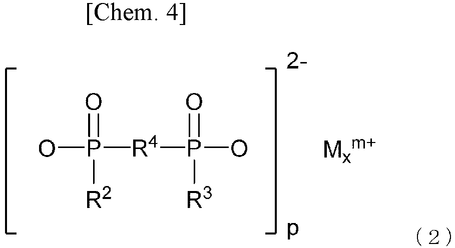

In the formulas,
R² and R³ are the same as or different from each other and are each a C1-C8 alkyl group or a C6-C20 aryl group;
R⁴ is a C1-C10 alkylene group, a C6-C20 arylene group, a C6-C20 arylene group substituted with a C1-C8 alkyl group, or a C1-C10 alkylene group substituted with a C6-C20 aryl group;
M is a metal ion of a main-group element of Group 2 or Group 13 in the periodic table of the elements, or a transition element;
m is 2 or 3;
p is 1 or 3; and
x is 1 or 2.

The C1-C8 alkyl group is a linear or branched alkyl group. Examples of the C1-C8 alkyl groups include methyl group, ethyl group, n-propyl group, isopropyl group, n-butyl group, t-butyl group and n-pentyl group.

Examples of the C6-C20 aryl groups include phenyl group, naphthyl group and biphenylyl groups (such as o-phenylphenyl, m-phenylphenyl and p-phenylphenyl groups).

The C1-C10 alkylene group is a linear or branched alkylene group. Examples of the C1-C10 alkylene groups include methylene group, ethylene group, n-propylene group, isopropylene group, n-butylene group, t-butylene group, n-pentylene group, n-octylene group and n-dodecylene group.

Examples of the C6-C20 arylene groups include phenylene group and naphthylene group.

Examples of the C6-C20 arylene groups substituted with a C1-C8 alkyl group include methylphenylene group, ethylphenylene group, t-butylphenylene group, methylnaphthylene group, ethylnaphthylene group and t-butylnaphthylene group.

Examples of the C1-C10 alkylene groups substituted with a C6-C20 aryl include phenylmethylene group, phenylethylene group, phenylpropylene group and phenylbutylene group.

Examples of the main-group elements of Group 2 or Group 13 in the periodic table of the elements include Be, Mg, Ca, Sr, Ba, Ra, B, Al, Ga, In and Tl. The transition metals shall include Group 12 elements (such as Zn and Cd). Thus, examples of the transition metals include Ti, Zn, Fe, Zr, Mn and Zn. M is preferably an ion of one or more metals selected from the group consisting of Al, Ca and Zn.

The letter m indicates the valence of M. For example, m is 3 when M is Al, and m is 2 when M is Ca or Zn.

The letters p and x are appropriately determined in accordance with the valence m. In the formula (2), for example, p and x are determined so that 2p = mx.

Examples of the phosphinic acids in the phosphinic acid salts (B) include dimethylphosphinic acid, ethylmethylphosphinic acid, diethylphosphinic acid, methyl-n-propylphosphinic acid, methylphenylphosphinic acid, diphenylphosphinic acid, methane-di(methylphosphinic acid), ethane-1,2-di(methylphosphinic acid), hexane-1,6-di(methylphosphinic acid) and benzene-1,4-di(methylphosphinic acid).

The phosphinic acid salt (B) may be produced by a known method such as one described in Japanese Patent Application Kokai Publication No. 2007-507566 or European Patent No. 0699708. Alternatively, the phosphinic acid salt (B) may be produced by converting a phosphinic acid essentially into a monomer or, depending on the reaction conditions, into a polymer in an aqueous solution containing a metal carboxylate salt, a metal hydroxide or a metal oxide.

The phosphinic acid salt (B) may be purchased from the market. Examples of the commercially available products of the phosphinic acid salts (B) include organic phosphinic acid aluminum salts such as EXOLIT OP1230, EXOLIT OP1240, EXOLIT OP930 and EXOLIT OP935 manufactured by Clariant.

The phosphinic acid salts (B) may be one kind or a combination of two or more kinds.

### [Phosphazene compounds (C)]

The phosphazene compound (C) is a component that imparts flame retardancy and mechanical properties to the polyamide resin composition. The phosphazene compound (C) is a cyclic phosphazene compound.

The cyclic phosphazene compound is a compound having a -P=N- bond as a repeating unit. The cyclic phosphazene compound is preferably a compound represented by the following formula (3):

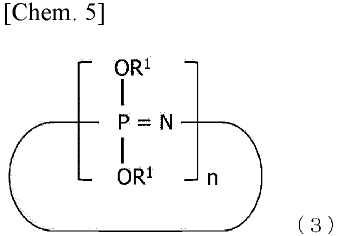

In the formula, n indicates an integer of 3 to 25, and the plurality of R¹ denote unsubstituted or substituted aryl groups that are the same as or different from one another, with the proviso that the proportion of unsubstituted aryl groups is 0.1 to 100 mol% relative to the total of the groups R¹.

The letter n is preferably an integer of 3 to 6, and particularly preferably an integer of 3 or 4.

The unsubstituted aryl groups are preferably C6-C20 aryl groups, more preferably, for example, phenyl groups, naphthyl groups and biphenylyl groups (such as o-phenylphenyl, m-phenylphenyl and p-phenylphenyl groups), and particularly preferably phenyl groups.

Examples of the substituents in the substituted aryl groups include alkyl groups, alkoxy groups, hydroxyl groups, (hydroxyaryl)alkyl groups, arylalkyl groups, hydroxyarylsulfonyl groups, hydroxyaryloxy groups, glycidyl groups and cyano groups. The aryl groups in the substituted aryl groups are the same as the unsubstituted aryl groups described above. The alkyl groups as the substituents are preferably C1-C10 alkyl groups, and particularly preferably C1-C3 alkyl groups.

Examples of the substituted aryl groups include alkyl-substituted aryl groups {including, for example, tolyl (such as o-tolyl, m-tolyl and p-tolyl), xylyl (such as 3,4-xylyl, 3,5-xylyl, 2,3-xylyl, 2,4-xylyl, 2,5-xylyl and 2,6-xylyl), ethylphenyl, cumyl (such as o-cumyl, m-cumyl, p-cumyl and phenylcumyl), butylphenyl (such as 2-t-butylphenyl, 4-t-butylphenyl, 2,4-di-t-butylphenyl, 2,6-di-t-butylphenyl, 3-methyl-6-t-butylphenyl and 2,6-di-t-butyl-4-methylphenyl), amylphenyl (such as 2,4-di-t-amylphenyl and 2,6-di-t-amylphenyl), cyclohexylphenyl, trimethylphenyl and methylnaphthyl}, alkoxyphenyl groups (such as o-methoxyphenyl, m-methoxyphenyl and p-methoxyphenyl groups), hydroxyphenyl groups (such as o-hydroxyphenyl, m-hydroxyphenyl and p-hydroxyphenyl groups, and p-(p'-hydroxyphenyl)phenyl group), (hydroxyaryl)alkylaryl groups (such as p-[2-(p'-hydroxyphenyl)isopropyl]phenyl group), (hydroxyarylsulfonyl)aryl groups (such as p-(p'-hydroxyphenylsulfonyl)phenyl group), (hydroxyaryloxy)aryl groups (such as p-(p'-hydroxyphenyloxy)phenyl group), glycidylphenyl and cyanophenyl.

The substituted aryl groups are preferably phenyl groups substituted with a C1-C3 alkyl group (for example, o-tolyl, m-tolyl, p-tolyl, 2,4-xylyl, 2,6-xylyl and 3,5-xylyl groups) and/or cyanophenyl groups.

In the formula (3), the proportion of unsubstituted aryl groups relative to the total of the groups R¹ is 0.1 to 100 mol%, more preferably 50 to 100 mol%, still more preferably 70 to 100 mol%, and particularly preferably 100 mol%.

Specific examples of the cyclic phosphazene compounds include 2,2,4,4,6,6-hexaphenoxycyclotriphosphazene (a compound in which n = 3), 2,2,4,4,6,6,8,8-octaphenoxycyclotetraphosphazene (a compound in which n = 4), and 2,2,4,4,6,6,8,8,10,10-decaphenoxycyclopentaphosphazene (a compound in which n = 5). The phosphazene compound (C) may be purchased from the market. Examples of the commercially available products of the phosphazene compounds (C) include Rabitle FP-110, Rabitle FP-300 and Rabitle FP-390 manufactured by FUSHIMI Pharmaceutical Co., Ltd.

The phosphazene compounds (C) may be used singly, or two or more may be used in combination. For example, the phosphazene compound (C) may be a mixture of two or more cyclic phosphazene compounds having different values of n.

### [Additional components]

The polyamide resin composition may include additional components as long as the advantageous effects of the present invention are not impaired. Examples of the additional components include components (D) to (H) described later, additional thermoplastic resins, plasticizers, antioxidants, heat stabilizers, ultraviolet absorbers, light stabilizers, antistatic agents, crystallization accelerators and colorants.

The additional components belonging to the same type may be used singly, or two or more may be used in combination.

### [Elastomer polymers (D) (other than core-shell rubber-type graft copolymers (F))]

An elastomer polymer (D) is a component that imparts impact resistance to the polyamide resin composition. The elastomer polymers (D) exclude core-shell rubber-type graft copolymers (F) described later.

Examples of the elastomer polymers (D) include polyolefin based resins such as high-density polyethylene (HDPE), medium-density polyethylene (MDPE), low-density polyethylene (LDPE), linear low-density polyethylene (LLDPE), ultrahigh-molecular weight polyethylene (UHMWPE), polypropylene (PP), polybutene (PB), polymethylpentene (TPX) and saponified ethylene/vinyl acetate copolymer (EVOH); polystyrene based resins such as polystyrene (PS), syndiotactic polystyrene (SPS), methyl methacrylate/styrene copolymer (MS) and methyl methacrylate/styrene/butadiene copolymer (MBS); resins obtained by introducing functional groups such as carboxyl groups and salts thereof, acid anhydride groups and epoxy groups into the polyolefin based resins and the polystyrene based resins described above; polyester based resins such as polybutylene terephthalate (PBT), polyethylene terephthalate (PET), polyethylene isophthalate (PEI), poly(ethylene terephthalate/ethylene isophthalate) copolymer (PET/PEI), poly(trimethylene terephthalate) (PTT), poly(cyclohexanedimethylene terephthalate) (PCT), polyethylene naphthalate (PEN), polybutylene naphthalate (PBN), polyarylate (PAR), liquid crystal polyesters (LCP), polylactic acid (PLA) and polyglycolic acid (PGA); polyether based resins such as polyacetal (POM) and polyphenylene ether (PPO); polysulfone based resins such as polysulfone (PSU), polyethersulfone (PESU) and polyphenylsulfone (PPSU); polythioether based resins such as polyphenylene sulfide (PPS) and polythioethersulfone (PTES); polyketone based resins such as polyketone (PK), polyether ketone (PEK), polyether ether ketone (PEEK), polyether ketone ketone (PEKK), polyether ether ether ketone (PEEEK), polyether ether ketone ketone (PEEKK), polyether ketone ketone ketone (PEKKK) and polyether ketone ether ketone ketone (PEKEKK); polynitrile based resins such as polyacrylonitrile (PAN), polymethacrylonitrile, acrylonitrile/styrene copolymer (AS), methacrylonitrile/styrene copolymer, acrylonitrile/butadiene/styrene copolymer (ABS) and acrylonitrile/butadiene copolymer (NBR); polymethacrylate based resins such as polymethyl methacrylate (PMMA) and polyethyl methacrylate (PEMA); polyvinyl based resins such as polyvinyl alcohol (PVA), polyvinylidene chloride (PVDC), polyvinyl chloride (PVC), vinyl chloride/vinylidene chloride copolymer and vinylidene chloride/methyl acrylate copolymer; cellulose based resins such as cellulose acetate and cellulose butyrate; polycarbonate based resins such as polycarbonate (PC); polyimide based resins such as thermoplastic polyimide (TPI), polyetherimide, polyesterimide, polyamideimide (PAI) and polyesteramideimide; thermoplastic polyurethane based resins; polyamide elastomers, polyurethane elastomers, polyester elastomers, fluorine-containing based polymers such as polyvinylidene fluoride (PVDF), polyvinyl fluoride (PVF), polytetrafluoroethylene (PTFE), polychlorofluoroethylene (PCTFE), tetrafluoroethylene/ethylene copolymer (ETFE), ethylene/chlorotrifluoroethylene copolymer (ECTFE), tetrafluoroethylene/hexafluoropropylene copolymer (FEP), tetrafluoroethylene/hexafluoropropylene/vinylidene fluoride copolymer (THV), tetrafluoroethylene/hexafluoropropylene/vinylidene fluoride/perfluoro(alkyl vinyl ether) copolymer, tetrafluoroethylene/perfluoro(alkyl vinyl ether) copolymer (PFA), tetrafluoroethylene/hexafluoropropylene/perfluoro(alkyl vinyl ether) copolymer and chlorotrifluoroethylene/perfluoro(alkyl vinyl ether)/tetrafluoroethylene copolymer (CPT), and polymers obtained by introducing amino-reactive functional groups into the fluorine-containing based polymers described above. The elastomer polymers (D) may be used singly, or two or more may be used in combination.

From the point of view of the compatibility with the aliphatic polyamide (A), the elastomer polymer (D) is preferably an elastomer polymer that contains a structural unit derived from an unsaturated compound having a carboxyl group and/or an acid anhydride group. Specifically, the elastomer polymer (D) may be, for example, an (ethylene and/or propylene)/α-olefin copolymer, an (ethylene and/or propylene)/(α,β-unsaturated carboxylic acid and/or α,β-unsaturated carboxylic acid ester) copolymer, or an aromatic vinyl compound/conjugated diene compound block copolymer each containing a structural unit derived from an unsaturated compound having a carboxyl group and/or an acid anhydride group. Such polymers may be used singly, or two or more may be used in combination.

The (ethylene and/or propylene)/α-olefin copolymer is a polymer obtained by copolymerizing ethylene and/or propylene with a C3 or higher α-olefin. Examples of the C3 or higher α-olefins include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene and 12-ethyl-1-tetradecene. These may be used singly, or two or more may be used in combination.

The copolymer may include an additional comonomer, for example, a polyene such as a nonconjugated diene. Examples of the nonconjugated dienes include 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbornene, 5-ethylidene-2-norbornene, 5-methylene-2-norbornene, 5-isopropylidene-2-norbornene, 6-chloromethyl-5-isopropylidene-2-norbornene, 2,3-diisopropylidene-5-norbornene, 2-ethylidene-3-isopropylidene-5-norbornene and 2-propenyl-2,5-norbornadiene. These may be used singly, or two or more may be used in combination.

The (ethylene and/or propylene)/(α,β-unsaturated carboxylic acid and/or α,β-unsaturated carboxylic acid ester) copolymer is a polymer obtained by copolymerizing ethylene and/or propylene with an α,β-unsaturated carboxylic acid monomer and/or an α,β-unsaturated carboxylic acid ester monomer. Examples of the α,β-unsaturated carboxylic acid monomers include acrylic acid, methacrylic acid, maleic acid and itaconic acid. Examples of the α,β-unsaturated carboxylic acid ester monomers include the methyl esters, the ethyl esters, the propyl esters, the butyl esters, the pentyl esters, the hexyl esters, the heptyl esters, the octyl esters, the nonyl esters, the decyl esters, the 2-ethylhexyl esters and the hydroxyethyl esters of the above α,β-unsaturated carboxylic acids. These may be used singly, or two or more may be used in combination.

The aromatic vinyl compound/conjugated diene compound block copolymer is a block copolymer composed of an aromatic vinyl compound-based polymer block and a conjugated diene compound-based polymer block. The block copolymer that is used here includes at least one aromatic vinyl compound-based polymer block and at least one conjugated diene compound-based polymer block. In the block copolymer, unsaturated bonds in the conjugated diene compound-based polymer block may be hydrogenated.

The aromatic vinyl compound-based polymer block is a polymer block mainly composed of units derived from an aromatic vinyl compound. Examples of the aromatic vinyl compounds in this case include styrene, o-methylstyrene, m-methylstyrene, p-methylstyrene, 1,5-dimethylstyrene, 2,4-dimethylstyrene, vinylnaphthalene, vinyl anthracene, 4-propylstyrene, 4-cyclohexylstyrene, 4-dodecylstyrene, 2-ethyl-4-benzylstyrene and 4-(phenylbutyl)styrene. These may be used singly, or two or more may be used in combination. In some cases, the aromatic vinyl compound-based polymer block may contain a small amount of units from other unsaturated monomers.

The conjugated diene compound-based polymer block is a polymer block derived from one, or two or more conjugated diene compounds such as 1,3-butadiene, chloroprene, isoprene, 2,3-dimethyl-1,3-butadiene, 1,3-pentadiene, 4-methyl-1,3-pentadiene and 1,3-hexadiene. When the aromatic vinyl compound/conjugated diene compound block copolymer is hydrogenated, the unsaturated bonds in the conjugated diene compound-based polymer block are partially or completely saturated by hydrogenation.

The molecular structures of the aromatic vinyl compound/conjugated diene compound block copolymer and of a hydrogenated product thereof may be linear, branched, radial or a combination of any thereof. Among these molecular structures, the aromatic vinyl compound/conjugated diene compound block copolymer and/or the hydrogenated product thereof is preferably one, or two or more kinds of polymers selected from diblock copolymers in which one aromatic vinyl compound-based polymer block and one conjugated diene compound-based polymer block linearly bonded to each other, triblock copolymers in which three polymer blocks linearly bonded in the order of an aromatic vinyl compound-based polymer block, a conjugated diene compound-based polymer block and an aromatic vinyl compound-based polymer block, and hydrogenated products of these copolymers. Examples thereof include unhydrogenated or hydrogenated styrene/butadiene block copolymers, unhydrogenated or hydrogenated styrene/isoprene block copolymers, unhydrogenated or hydrogenated styrene/butadiene/styrene block copolymers, unhydrogenated or hydrogenated styrene/isoprene/styrene block copolymers, unhydrogenated or hydrogenated styrene/(ethylene/butadiene)/styrene block copolymers, and unhydrogenated or hydrogenated styrene/(isoprene/butadiene)/styrene block copolymers. These may be used singly, or two or more may be used in combination.

Examples of the unsaturated compounds having a carboxyl group that are useful for forming structural units in the elastomer polymer (D) include acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo-[2.2.1]-5-heptene-2,3-dicarboxylic acid, and metal salts, alkyl esters, hydroxyalkyl esters and aminoalkyl esters of these carboxylic acids. Examples of the unsaturated compounds having an acid anhydride group that are useful for forming structural units in the elastomer polymer (D) include dicarboxylic anhydrides having α,β-unsaturated bonds such as maleic anhydride, itaconic anhydride, citraconic anhydride and endobicyclo-[2.2.1]-5-heptene-2,3-dicarboxylic anhydride. These may be used singly, or two or more may be used in combination. Among those described above, dicarboxylic anhydrides having α,β-unsaturated bonds are preferable, and maleic anhydride and itaconic anhydride are more preferable.

From the points of view of impact resistance and fluidity, the concentration of the carboxyl groups and/or the acid anhydride groups in the elastomer polymer (D) is preferably 25 µeq/g or more and 200 µeq/g or less, and more preferably 50 µeq/g or more and 150 µeq/g or less.

To determine the concentration of the carboxyl groups and/or the acid anhydride groups in the elastomer polymer (D), the elastomer polymer may be dissolved into a toluene solution and further combined with ethanol to give a sample solution, which is then titrated with a 0.1 N KOH ethanol solution using phenolphthalein as an indicator.

When a combination of two or more elastomer polymers having different concentrations of the carboxyl groups and/or the acid anhydride groups is used as the elastomer polymer (D), the concentration of the carboxyl groups and/or the acid anhydride groups in the elastomer polymer (D) is preferably determined by neutralization titration of a sample toluene and ethanol solution with a 0.1 N KOH ethanol solution using phenolphthalein as an indicator. When, however, the concentrations of the carboxyl groups and/or the acid anhydride groups in the respective elastomer polymers, and the mixing ratio of the polymers are known, the concentration of the carboxyl groups and/or the acid anhydride in the elastomer polymer (D) may be the average value determined by multiplying the respective concentrations of the carboxyl groups and/or the acid anhydride groups by the mixing ratio and combining the products.

### [Phosphorus-containing polymer compounds (E)]

A phosphorus-containing polymer compound (E) is a component that imparts flame retardancy to the polyamide resin composition. The phosphorus-containing polymer compound (E) may be one kind or a combination of two or more kinds. From the points of view of mechanical properties and flame retardancy, the phosphorus-containing polymer compound (E) preferably includes a repeating unit that has a group represented by the following formula (4):

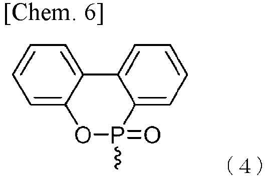

The phosphorus-containing polymer compound (E) is particularly preferably a compound represented by the following formula (5):

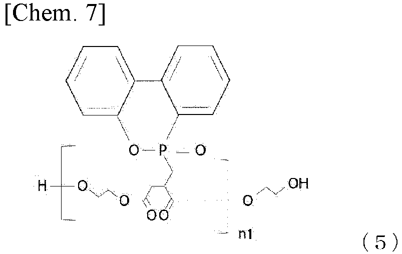

In the formula, n1 is an integer of 4 or greater, preferably an integer of 6 or more and 100 or less, and particularly preferably an integer of 10 or more and 60 or less.

### [Core-shell rubber-type graft copolymers (F)]

A core-shell rubber-type graft copolymer (F) is a component that imparts shaping properties, flame retardancy and impact resistance to the polyamide resin composition. The core-shell rubber-type graft copolymer (F) is a copolymer having a core-shell structure in which the core layer is a polymer component serving as a rubber component and the shell layer is grafts of a copolymerizable monomer component that are copolymerized with the above polymer component. The polymer may include two or more shell layers.

The core-shell rubber-type graft copolymers (F) may be one kind or a combination of two or more kinds.

From the points of view of shaping properties, flame retardancy and low-temperature impact resistance, the core-shell rubber-type graft copolymer (F) is preferably a silicone based copolymer. When the core-shell rubber-type graft copolymer (F) is a silicone based copolymer, the core layer may include silicone units, the shell layer may include silicone units, or the core layer and the shell layer may include silicone units. To further enhance shaping properties, flame retardancy and low-temperature impact resistance, it is preferable that the core layer include silicone units.

The glass transition temperature of the polymer component forming the core layer is usually 0°C or below, preferably -10°C or below, more preferably -20°C or below, and still more preferably -30°C or below. Specific examples of the polymer components for forming the core layer include polybutadiene, polyisoprene, polyalkyl acrylates such as polybutyl acrylate, poly(2-ethylhexyl acrylate) and butyl acrylate-2-ethylhexyl acrylate copolymer, silicone based rubbers such as polyorganosiloxane rubbers, butadiene-acrylic composites, IPN (interpenetrating polymer network) composite rubbers composed of polyorganosiloxane rubbers and polyalkyl acrylate rubbers, styrene-butadiene copolymer, ethylene-α-olefin based copolymers such as ethylene-propylene copolymer, ethylene-butene copolymer and ethylene-octene copolymer, ethylene-acrylic copolymer, and fluororubbers. These may be used singly, or two or more may be used in combination. Among those described above, polybutadiene, polyalkyl acrylates, polyorganosiloxanes, composites composed of polyorganosiloxanes and polyalkyl acrylates, and butadiene-styrene copolymer are preferable from the points of view of mechanical characteristics and surface appearance, and polyorganosiloxanes, and composites composed of polyorganosiloxanes and polyalkyl acrylates are more preferable.

Specific examples of the monomer components that are graft-copolymerizable with the polymer component in the core layer and that forms the shell layer include aromatic vinyl compounds, vinyl cyanide compounds, (meth)acrylic acid ester compounds, (meth)acrylic acid compounds, epoxy group-containing (meth)acrylic acid ester compounds such as glycidyl (meth)acrylate; maleimide compounds such as maleimide, N-methylmaleimide and N-phenylmaleimide; and α,β-unsaturated carboxylic acid compounds such as maleic acid, phthalic acid and itaconic acid, and anhydrides thereof (such as, for example, maleic anhydride). These monomer components may be used singly, or two or more may be used in combination. Among those described above, aromatic vinyl compounds, vinyl cyanide compounds, (meth)acrylic acid ester compounds and (meth)acrylic acid compounds are preferable from the points of view of mechanical characteristics and surface appearance, and (meth)acrylic acid ester compounds are more preferable. Specific examples of the (meth)acrylic acid ester compounds include methyl (meth)acrylate, ethyl (meth)acrylate, butyl (meth)acrylate, cyclohexyl (meth)acrylate and octyl (meth)acrylate. Methyl (meth)acrylate and ethyl (meth)acrylate are preferable, and methyl (meth)acrylate is more preferable.

Examples of the core-shell rubber-type graft copolymers (F) include diene based core-shell rubbery polymers such as methyl methacrylate-butadiene-styrene copolymer resin (MBS resin) and acrylonitrile-butadiene-styrene copolymer resin (ABS resin); acryl based core-shell rubbery polymers such as acrylate-styrene-acrylonitrile copolymer resin (ASA resin) and acrylate-methyl methacrylate copolymer resin; silicone based core-shell rubbery polymers (silicone based copolymers) such as silicone-acrylate-methyl methacrylate copolymer resin and silicone-acrylate-acrylonitrile-styrene copolymer resin; and modified products of the above polymers with modifiers such as maleic anhydride and glycidyl methacrylate.

Examples of commercially available core-shell rubber-type graft copolymers (F) include products using silicone based core-shell rubbery polymers such as METABLEN (registered trademark) series S-2001, S-2006, S-2501, S-2030, S-2100, S-2200, SRK200A, SX-005 and SX-006 (manufactured by Mitsubishi Chemical Corporation); products using diene based core-shell rubbery polymers such as PARALOID (registered trademark) EXL-2655 (manufactured by Rohm & Haas), METABLEN (registered trademark) series C-223A, C-215A, C-201A, C-140A, E-860A, E-870A and E-875A (manufactured by Mitsubishi Chemical Corporation); and products using acryl based core-shell rubbery polymers such as STAPHYLOID (registered trademark) series AC-3355 and TR-2122 (manufactured by Aica Kogyo Co., Ltd.), PARALOID (registered trademark) series EXL-2611 and EXL-3387 (manufactured by Rohm & Haas), and METABLEN (registered trademark) series W-300A, W-450A, W-600A and W-377 (manufactured by Mitsubishi Chemical Corporation).

The core-shell rubber-type graft copolymer (F) preferably has a particle shape. From the points of view of shaping properties, flame retardancy, impact resistance and appearance of molded bodies, the volume average particle diameter (D50) of the particles of the core-shell rubber-type graft copolymer (F) is preferably 100 nm or more, more preferably 250 nm or more, and is preferably 800 nm or less. The core-shell rubber-type graft copolymer (F) may be produced as particles having a volume average particle diameter (D50) in the above range by an emulsion polymerization method.

The volume average particle diameter of the particles of the core-shell rubber-type graft copolymer (F) is the average diameter measured on the volume basis, and is a value of the 50% median diameter (D50). The volume average particle diameter (D50) may be measured by a method such as a laser diffraction/scattering method, an image analysis method, a Coulter method or a centrifugal sedimentation method. The volume average particle diameter (D50) of the particles is preferably determined by measurement based on a laser diffraction/scattering method.

### [Impact modifiers (G) other than components (F)]

An impact modifier (G) other than the component (F) (hereinafter, also written as the additional impact modifier (G)) is a component that imparts impact resistance to the polyamide resin composition. Examples of the additional impact modifiers (G) include those components described in the components (D).

The additional impact modifiers (G) may be one kind or a combination of two or more kinds.

### [Flame retardants (H) other than components (B) and (C)]

A flame retardant (H) other than the components (B) and (C) (hereinafter, also written as the additional flame retardant (H)) is a component that imparts additional flame retardancy to the polyamide resin composition. Examples of the additional flame retardants (H) include phosphorus-containing compounds (including the phosphorus-containing polymer compounds (E)), halogen-containing compounds and boron-containing compounds.

The additional flame retardants (H) may be one kind or a combination of two or more kinds.

From the point of view of flame retardancy, the additional flame retardant (H) is preferably a phosphorus-containing polymer compound (E).

### [Additional thermoplastic resins]

Some exemplary additional thermoplastic resins are polyolefin based resins such as high-density polyethylene (HDPE), medium-density polyethylene (MDPE), low-density polyethylene (LDPE), linear low-density polyethylene (LLDPE), ultrahigh-molecular weight polyethylene (UHMWPE), polypropylene (PP), polybutene (PB), polymethylpentene (TPX) and saponified ethylene/vinyl acetate copolymer (EVOH); polystyrene based resins such as polystyrene (PS), syndiotactic polystyrene (SPS), methyl methacrylate/styrene copolymer (MS) and methyl methacrylate/styrene/butadiene copolymer (MBS); resins obtained by introducing functional groups such as carboxyl groups and salts thereof, acid anhydride groups and epoxy groups into the polyolefin based resins and the polystyrene based resins described above; polyester based resins such as polybutylene terephthalate (PBT), polyethylene terephthalate (PET), polyethylene isophthalate (PEI), poly(ethylene terephthalate/ethylene isophthalate) copolymer (PET/PEI), poly(trimethylene terephthalate) (PTT), poly(cyclohexanedimethylene terephthalate) (PCT), polyethylene naphthalate (PEN), polybutylene naphthalate (PBN), polyarylate (PAR), liquid crystal polyesters (LCP), polylactic acid (PLA) and polyglycolic acid (PGA); polyether based resins such as polyacetal (POM) and polyphenylene ether (PPO); polysulfone based resins such as polysulfone (PSU), polyethersulfone (PESU) and polyphenylsulfone (PPSU); polythioether based resins such as polyphenylene sulfide (PPS) and polythioethersulfone (PTES); polyketone based resins such as polyketone (PK), polyether ketone (PEK), polyether ether ketone (PEEK), polyether ketone ketone (PEKK), polyether ether ether ketone (PEEEK), polyether ether ketone ketone (PEEKK), polyether ketone ketone ketone (PEKKK) and polyether ketone ether ketone ketone (PEKEKK); polynitrile based resins such as polyacrylonitrile (PAN), polymethacrylonitrile, acrylonitrile/styrene copolymer (AS), methacrylonitrile/styrene copolymer, acrylonitrile/butadiene/styrene copolymer (ABS) and acrylonitrile/butadiene copolymer (NBR); polymethacrylate based resins such as polymethyl methacrylate (PMMA) and polyethyl methacrylate (PEMA); and polyvinyl based resins such as polyvinyl alcohol (PVA), polyvinylidene chloride (PVDC), polyvinyl chloride (PVC), vinyl chloride/vinylidene chloride copolymer and vinylidene chloride/methyl acrylate copolymer.

Examples of the additional thermoplastic resins further include cellulose based resins such as cellulose acetate and cellulose butyrate; polyimide based resins such as thermoplastic polyimide (TPI), polyetherimide, polyesterimide, polyamideimide (PAI) and polyesteramideimide; thermoplastic polyurethane based resins; polyamide elastomers, polyurethane elastomers, polyester elastomers, fluorine-containing based polymers such as polyvinylidene fluoride (PVDF), polyvinyl fluoride (PVF), polytetrafluoroethylene (PTFE), polychlorofluoroethylene (PCTFE), tetrafluoroethylene/ethylene copolymer (ETFE), ethylene/chlorotrifluoroethylene copolymer (ECTFE), tetrafluoroethylene/hexafluoropropylene copolymer (FEP), tetrafluoroethylene/hexafluoropropylene/vinylidene fluoride copolymer (THV), tetrafluoroethylene/hexafluoropropylene/vinylidene fluoride/perfluoro(alkyl vinyl ether) copolymer, tetrafluoroethylene/perfluoro(alkyl vinyl ether) copolymer (PFA), tetrafluoroethylene/hexafluoropropylene/perfluoro(alkyl vinyl ether) copolymer and chlorotrifluoroethylene/perfluoro(alkyl vinyl ether)/tetrafluoroethylene copolymer (CPT), and polymers obtained by introducing amino-reactive functional groups into the fluorine-containing based polymers described above. The additional thermoplastic resins may be used singly, or two or more may be used in combination.

### [Plasticizers]

Some exemplary plasticizers are those described in Japanese Patent Application Kokai Publication No. 2017-43762, such as, for example, N-butylbenzenesulfonamide, N-octylbenzenesulfonamide, N-ethylhexylbenzenesulfonamide, N-cyclohexylbenzenesulfonamide, toluenesulfonamide and N-alkyltoluenesulfonamide.

Specific examples of the additional components other than those described above include components usually used in polyamide resin compositions.

### [Contents of components]

The contents of the components relative to the whole of the polyamide resin composition are as follows.

The aliphatic polyamide (A) is contained in an amount of 60 mass% or more and 79 mass% or less based on 100 mass% of the polyamide resin composition. If the content of the aliphatic polyamide (A) is less than 60 mass%, the polyamide resin composition tends to be poor in mechanical properties. If the content of the aliphatic polyamide (A) is more than 85 mass%, the results of a UL94 combustion test tend to be inferior. From the points of view of mechanical properties, chemical resistance and heat resistance, the aliphatic polyamide (A) is contained in an amount of preferably 60 mass% or more and 76 mass% or less, further preferably 62 mass% or more and 75 mass% or less, and particularly preferably 64 mass% or more and 72 mass% or less based on 100 mass% of the polyamide resin composition. The content of the aliphatic polyamide (A) based on 100 mass% of the polyamide resin composition is not particularly limited as long as the content is 60 mass% or more after deduction of the contents of the other components described later.

The phosphazene compound (C) is contained in an amount of 5 mass% or more and 20 mass% or less in the polyamide resin composition. If the content of the phosphazene compound (C) in the polyamide resin composition is more than 20 mass%, the mechanical strength at a low temperature (for example, -30 to -60°C) is lowered. If the content of the phosphazene compound (C) in the polyamide resin composition is less than 3 mass%, the results of a UL94 combustion test are inferior.

The contents of the component (B), the additional thermoplastic resin and the plasticizer in the polyamide resin composition are as follows.

From the points of view of flame retardancy and mechanical properties, the phosphinic acid salt (B) is contained in an amount of 16 mass% or more and 20 mass% or less, preferably 16 mass% or more and 19 mass% or less, and particularly preferably 16 mass% or more and 18 mass% or less in the polyamide resin composition.

The content of the additional thermoplastic resin in the polyamide resin composition is preferably 20 parts by mass or less, and particularly preferably 15 parts by mass or less, based on 100 parts by mass of the polyamide resin composition. The content of the additional thermoplastic resin in the polyamide resin composition is preferably more than 0 part by mass, and particularly preferably 1 part by mass or more, based on 100 parts by mass of the polyamide resin composition.

To attain excellent volatilization resistance, the content of the plasticizer in the polyamide resin composition is preferably 5 mass% or less, and more preferably 1 mass% or less of the polyamide resin composition. The plasticizer may give rise to a decrease in low-temperature impact resistance. It is therefore particularly preferable that the polyamide resin composition contain no plasticizers when molded bodies are required low-temperature impact resistance.

[Possible embodiments of additional components and contents of components]

The following are the first to third possible embodiments of the additional components and the contents of the components in the polyamide resin composition.
[1] In the first embodiment, the aliphatic polyamide (A) is an aliphatic polyamide (A1) having a ratio of the number of methylene groups to the number of amide groups of 5.0 or more; the phosphazene compound (C) is a cyclic phosphazene compound (C1); and the aliphatic polyamide (A1) having a ratio of the number of methylene groups to the number of amide groups of 5.0 or more is contained in an amount of 60 mass% or more and 79 mass% or less, and the phosphinic acid salt (B) is contained in an amount of 16 mass% or more and 20 mass% or less, based on 100 mass% of the polyamide resin composition, and the phosphazene compound (C) is contained in an amount of 5 mass% or more and 20 mass% or less based on 100 mass% of the polyamide resin composition. The polyamide resin composition according to the first embodiment further has excellent surface properties and melt characteristics, and exhibits excellent results in an oxygen index test.

In the first embodiment, the polyamide resin composition may include, as additional components, the elastomer polymer (D) (other than the core-shell rubber-type graft copolymer (F)), the core-shell rubber-type graft copolymer (F) and the additional impact modifier (G), or may include no such additional components. In the first embodiment, the polyamide resin composition may include the additional flame retardant (H).

In the first embodiment, the contents of the components may be as described hereinabove or may be as follows.

From the points of view of mechanical properties, surface properties and flame retardancy, the phosphazene compound (C) is contained in an amount of preferably 5 mass% or more and 15 mass% or less in the polyamide resin composition.

In the polyamide resin composition, the total content of the additional components except the additional thermoplastic resin and the plasticizer is preferably 20 parts by mass or less, and particularly preferably 15 parts by mass or less, based on 100 parts by mass of the polyamide resin composition.

[2] In the second embodiment, the polyamide resin composition further includes the elastomer polymer (D) (other than the core-shell rubber-type graft copolymer (F)) and the phosphorus-containing polymer compound (E). The polyamide resin composition according to the second embodiment has, in addition to the above excellent properties, higher mechanical properties and excellent extrusion shaping properties, and exhibits excellent results in an oxygen index test.

When the polyamide resin composition of the second embodiment includes the additional impact modifier (G) as an additional component, the content thereof is calculated as the content of the elastomer polymer (D) (other than the core-shell rubber-type graft copolymer (F)). In the second embodiment, the polyamide resin composition may include or may not include the core-shell rubber-type graft copolymer (F) as an additional component.

In the second embodiment, the polyamide resin composition may include or may not include the additional flame retardant (H).

In the second embodiment, the contents of the components may be as described hereinabove or may be as follows.

From the points of view of impact resistance, fluidity and flame retardancy, the elastomer polymer (D) (other than the core-shell rubber-type graft copolymer (F)) is contained in an amount of preferably 3 mass% or more and 15 mass% or less, more preferably 3 mass% or more and 10 mass% or less, and particularly preferably 3 mass% or more and 7 mass% or less, based on 100 mass% of the polyamide resin composition. When the elastomer polymer (D) (other than the core-shell rubber-type graft copolymer (F)) is contained in an amount of 3 mass% or more and 15 mass% or less in the polyamide resin composition taken as 100 mass%, the aliphatic polyamide (A) is contained in an amount of preferably 60 mass% or more and 76 mass% or less based on 100 mass% of the polyamide resin composition.

From the points of view of mechanical properties, surface properties and flame retardancy, the phosphazene compound (C) is contained in an amount of preferably 5 mass% or more and 10 mass% or less, more preferably 5 mass% or more and 8 mass% or less, and particularly preferably 5 mass% or more and 7 mass% or less, based on 100 mass% of the polyamide resin composition.

From the points of view of mechanical properties and flame retardancy, the phosphorus-containing polymer compound (E) is contained in an amount of preferably 3 mass% or more and 10 mass% or less, more preferably 3 mass% or more and 8 mass% or less, and particularly preferably 4 mass% or more and 7 mass% or less, based on 100 mass% of the polyamide resin composition. When the phosphorus-containing polymer compound (E) is contained in an amount of 3 mass% or more and 10 mass% or less based on 100 mass% of the polyamide resin composition, the aliphatic polyamide (A) is preferably 60 mass% or more and 76 mass% or less, based on 100 mass% of the polyamide resin composition.

In the polyamide resin composition, the total content of the additional components except the elastomer polymer (D) (other than the core-shell rubber-type graft copolymer (F)), the phosphorus-containing polymer compound (E), the additional thermoplastic resin and the plasticizer is preferably 20 parts by mass or less, and particularly preferably 15 parts by mass or less, based on 100 parts by mass of the polyamide resin composition.

[3] In the third embodiment, the polyamide resin composition further includes the core-shell rubber-type graft copolymer (F). The polyamide resin composition according to the third embodiment has, in addition to the above excellent properties, particularly high mechanical properties.

In the third embodiment, the contents of the components may be as described hereinabove or may be as follows.

From the points of view of shaping properties, flame retardancy and low-temperature impact resistance, the core-shell rubber-type graft copolymer (F) is contained in an amount of preferably 2 mass% or more and 15 mass% or less, more preferably 3 mass% or more and 13 mass% or less, and particularly preferably 5 mass% or more and 10 mass% or less, based on 100 mass% of the polyamide resin composition.

From the points of view of mechanical properties, surface properties and flame retardancy, the phosphazene compound (C) is contained in an amount of preferably 5 mass% or more and 10 mass% or less, more preferably 5 mass% or more and 8 mass% or less, and particularly preferably 5 mass% or more and 7 mass% or less, based on 100 mass% of the polyamide resin composition.

From the points of view of impact resistance and flame retardancy, the additional impact modifier (G) is contained in an amount of preferably 10 mass% or less, more preferably 1 mass% or more and 7 mass% or less, and particularly preferably 3 mass% or more and 5 mass% or less, based on 100 mass% of the polyamide resin composition. When the polyamide resin composition of the third embodiment includes the elastomer polymer (D) (other than the core-shell rubber-type graft copolymer (F)) as an additional component, the content thereof is calculated as the content of the additional impact modifier (G).

From the points of view of mechanical properties and flame retardancy, the additional flame retardant (H) is contained in an amount of preferably 10 mass% or less, more preferably 2 mass% or more and 8 mass% or less, and particularly preferably 3 mass% or more and 7 mass% or less, based on 100 mass% of the polyamide resin composition. When the polyamide resin composition of the third embodiment includes the phosphorus-containing polymer compound (E) as an additional component, the content thereof is calculated as the content of the additional flame retardant (H).

In the polyamide resin composition, the total content of the additional components except the additional impact modifier (G), the additional flame retardant (H), the additional thermoplastic resin and the plasticizer is preferably 20 parts by mass or less, and particularly preferably 15 parts by mass or less, based on 100 parts by mass of the polyamide resin composition.

### [Methods for producing polyamide resin compositions]

A method of producing the polyamide resin composition is not limited. Any method by mixing the components with one another can be employed as the method of producing the polyamide resin composition. Here, the aliphatic polyamide (A), the phosphinic acid salt (B), the phosphazene compound (C) and, if necessary, the additional components may be mixed together by any of conventionally known methods without limitation. For example, the polyamide resin composition may be produced in such a manner that pellets of the aliphatic polyamide (A), pellets of the phosphinic acid salt (B) and pellets of the phosphazene compound (C) are dry blended in a tumbler and/or a mixer uniformly so that the mixing ratio will be as described hereinabove, or in such a manner that the aliphatic polyamide (A), the phosphinic acid salt (B) and the phosphazene compound (C) together with the additional components as required are dry blended beforehand in concentrations that will be used at the time of shaping, and the blend is then melt-kneaded. The melt-kneading may be performed using a kneading machine such as a single-screw extruder, a twin-screw extruder, a kneader or a Banbury mixer.

### [Use applications of polyamide resin compositions]

The polyamide resin composition may be used as a molded body including the polyamide resin composition.

The molded body including the polyamide resin composition may be used in various applications including automobile parts, railway-related parts, mechanical parts such as electric tool housings, manufacturing materials, industrial materials, electrical parts, electronic parts, medical parts, food packaging parts, household products, office supplies, building material-related parts and furniture parts. Further, the molded body including the polyamide resin composition may be used for the purpose of fire protection in the above applications. The polyamide resin composition may be formed into desired shapes. Any melt-forming methods may be adopted such as extrusion, blow molding and injection molding. The shape of the molded body including the polyamide resin composition is not limited and may be, for example, a film shape, a sheet shape or a hollow shape (such as a tube shape, a hose shape or a bottle shape). The polyamide resin composition may be formed into a film shape or a sheet shape and may be post-processed into a hollow molded body.

Examples of the molded body used as automobile parts include fuel parts (fuel tanks such as gasoline tanks and oil tanks; and fuel transportation parts such as fuel delivery pipes, fuel rails, fuel tubes and fuel hoses); intake system parts or exhaust system parts (such as air ducts, intake manifolds, air cleaners, air cleaner boxes, resonators, throttle bodies, pneumatic hoses and pneumatic tubes); automobile outer panel/exterior structural members (such as air spoilers, fenders, bumpers and suspension boots); and other automobile parts (such as hose joints, hydraulic tubes, hydraulic hoses and seat covers).

Examples of the molded body used as railway-related parts include electric wire-coating materials (coating materials and covering materials) and seat covers.

Examples of the molded body used as electrical parts or electronic parts include plugs and fans.

Examples of the molded body used as building material-related parts include fire walls.

### [Further embodiments]

From the points of view of surface properties and mechanical properties, the polyamide resin composition is preferably free from one or more selected from the group consisting of phosphorous acid, inorganic zinc compounds, silica, coal ash, zeolite, silicate salts, poly(meta-xylylene adipamide) (PAMXD6), polycarbonate based resins, polyphenylene ether (PPE), phenol aralkyl based resins and epoxy resins. Further, from the points of view of surface properties and mechanical properties, the polyamide resin composition is preferably free from reinforcing materials (for example, inorganic fillers having such a shape as fibrous, powdery, particulate, plate, acicular, cloth or mat, glass fibers and organic fibers such as carbon fibers). Furthermore, the molded body including the polyamide resin composition are preferably free from reinforcing materials (for example, inorganic fillers having such a shape as fibrous, powdery, particulate, plate, acicular, cloth or mat, glass fibers and organic fibers such as carbon fibers) in view of the characteristics required in the applications of the molded body.

### EXAMPLES

Hereinbelow, the present invention will be described in detail by presenting Examples and Comparative Examples.

### [Materials used in Examples and Comparative Examples]

1. Aliphatic polyamides (A)
   (1) Polyamide 12 (A-1): Polyamide 12 (A-1) is a polyamide 12 (A-1) produced as follows.
      A 70-liter internal volume pressure-resistant reaction vessel equipped with a stirrer was charged with 19.73 kg (100.0 mol) of dodecanelactam, 258.3 g (0.909 mol) of stearic acid and 0.5 L of distilled water. The inside of the polymerization vessel was purged with nitrogen and was heated to 180°C. The mixture was stirred at the temperature until the reaction system became uniform. Then, the temperature inside the polymerization vessel was raised to 270°C, and polymerization was performed for 2 hours while controlling the pressure inside the vessel to 3.5 MPa and while performing stirring. Subsequently, the pressure was released to atmospheric pressure over a period of about 2 hours and was then reduced to 53 kPa, and the polymerization was performed under reduced pressure for 5 hours. Then, nitrogen was introduced into the autoclave to return the pressure to atmospheric pressure, and the product was withdrawn as a strand from a nozzle at a low position of the reaction vessel and was cut to give pellets. The pellets were dried under reduced pressure. A polyamide 12 having a relative viscosity of 1.67 was thus obtained. (Hereinafter, this polyamide 12 is written as the "polyamide 12 (A-1)").
   (2) Polyamide 12 (A-2): (UBESTA (registered trademark) manufactured by UBE INDUSTRIES, LTD., relative viscosity: 2.26)
2. Phosphinic acid salts (B)
   (1) Phosphinic acid metal salt (B-1): (Exolit OP1230 manufactured by Clariant Produkte GmbH)
   (2) Phosphinic acid metal salt (B-2): (Exolit (registered trademark) OP935 manufactured by Clariant Produkte GmbH)
3. Phosphazene compound (C)
   (1) Cyclic phosphazene compound (C-1): 2,2,4,4,6,6-hexaphenoxycyclotriphosphazene (Rabitle (registered trademark) FP-110 manufactured by FUSHIMI Pharmaceutical Co., Ltd.)
4. Elastomer polymer (D)
   (1) Maleic anhydride-modified ethylene/1-butene copolymer (D-1) (TAFMER (registered trademark) MH5010 manufactured by Mitsui Chemicals, Inc. (total concentration of carboxyl groups and acid anhydride groups: 50 µeq/g))
5. Phosphorus-containing polymer compound (E)
   (1) 2-(9,10-Dihydroxy-9-oxa-10-oxide-10-phosphaphenanthren-10-yl)methylsuccinic acid bis-(2-hydroxyethyl)-ester polymer (E-1) (ME-P8 manufactured by SANKO CO., LTD., average molecular weight: 10,000)
      (E-1) is represented by the following formula (5): 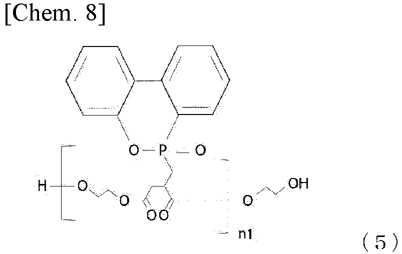
6. Core-shell rubber-type graft copolymer (F)
   (1) Alkyl methacrylate/alkyl acrylate/dimethylsiloxane copolymer (F-1) (METABLEN (registered trademark) SX-005 manufactured by Mitsubishi Chemical Corporation, core-shell rubber particles of a copolymer having polydimethylsiloxane as the core, and alkyl methacrylate and alkyl acrylate as the shells)
7. Additional impact modifier (G)
   (1) (G-1): (G-1) is the same as (D-1).
8. Additional flame retardants (H)
   (1) Melamine polyphosphate (H-1) (Melapur 200 70 manufactured by BASF)
   (2) Melamine cyanurate (H-2) (MC-6000 manufactured by Nissan Chemical Corporation)
   (3) (H-3): (H-3) is the same as (E-1).
9. Plasticizer (I)
   (1) N-Butylbenzenesulfonamide (I-1) (BBSA manufactured by Proviron)

### [Reference Example 1]

### Production of polyamide resin composition (A1-1)

The polyamide 12 (A-1) was mixed together beforehand with the phosphinic acid metal salt (B-1) and the cyclic phosphazene compound (C-1). The mixture was supplied to a twin-screw melt-kneader (model: TEX44, manufactured by The Japan Steel Works, LTD.) and was melt-kneaded at a cylinder temperature of 180°C to 270°C. The molten resin was extruded into a strand, which was then introduced into a water tank, cooled, cut and vacuum dried. Thus, 100 parts by mass of pellets of a polyamide 12 composition were obtained that included the polyamide 12 (A-1)/the phosphinic acid metal salt (B-1)/the cyclic phosphazene compound (C-1) = 78.3/18.7/3.0 (mass%). (This polyamide 12 composition will be written as the "polyamide composition (A1-1)" hereinbelow.) The amount of vapor generated during the production of the polyamide composition (A1-1) was clearly smaller than the amount when the general plasticizer BBSA (N-butylbenzenesulfonamide) was used.

### [Example 2]

### Production of polyamide 12 composition (A1-2)

The production of the polyamide 12 composition (A1-1) was repeated except that the amounts added of the polyamide 12 (A-1), the phosphinic acid metal salt (B-1) and the cyclic phosphazene compound (C-1) were changed. Thus, 100 parts by mass of pellets of a polyamide 12 composition were obtained that included the polyamide 12 (A-1)/the phosphinic acid metal salt (B-1)/the cyclic phosphazene compound (C-1) = 75.0/18.7/6.3 (mass%). (This polyamide 12 composition will be written as the "polyamide composition (A1-2)" hereinbelow.) The amount of vapor generated during the production of the polyamide composition (A1-2) was clearly smaller than the amount when the general plasticizer BBSA (N-butylbenzenesulfonamide) was used.

### [Example 3]

### Production of polyamide 12 composition (A1-3)

The production of the polyamide 12 composition (A1-1) was repeated except that the amounts added of the polyamide 12 (A-1), the phosphinic acid metal salt (B-1) and the cyclic phosphazene compound (C-1) were changed. Thus, 100 parts by mass of pellets of a polyamide 12 composition were obtained that included the polyamide 12 (A-1)/the phosphinic acid metal salt (B-1)/the cyclic phosphazene compound (C-1) = 71.3/18.7/10.0 (mass%). (This polyamide 12 composition will be written as the "polyamide composition (A1-3)" hereinbelow.) The amount of vapor generated during the production of the polyamide composition (A1-3) was clearly smaller than the amount when the general plasticizer BBSA (N-butylbenzenesulfonamide) was used.

### [Example 4]

### Production of polyamide 12 composition (A1-4)

The production of the polyamide 12 composition (A1-1) was repeated except that the amounts added of the polyamide 12 (A-1), the phosphinic acid metal salt (B-1) and the cyclic phosphazene compound (C-1) were changed. Thus, 100 parts by mass of pellets of a polyamide 12 composition were obtained that included the polyamide 12 (A-1)/the phosphinic acid metal salt (B-1)/the cyclic phosphazene compound (C-1) = 66.3/18.7/15.0 (mass%). (This polyamide 12 composition will be written as the "polyamide composition (A1-4)" hereinbelow.) The amount of vapor generated during the production of the polyamide composition (A1-4) was clearly smaller than the amount when the general plasticizer BBSA (N-butylbenzenesulfonamide) was used.

### [Example 5]

### Production of polyamide 12 composition (A1-5)

The production of the polyamide 12 composition (A1-1) was repeated except that the amounts added of the polyamide 12 (A-1), the phosphinic acid metal salt (B-1) and the cyclic phosphazene compound (C-1) were changed. Thus, 100 parts by mass of pellets of a polyamide 12 composition were obtained that included the polyamide 12 (A-1)/the phosphinic acid metal salt (B-1)/the cyclic phosphazene compound (C-1) = 77.7/16.0/6.3 (mass%). (This polyamide 12 composition will be written as the "polyamide composition (A1-5)" hereinbelow.) The amount of vapor generated during the production of the polyamide composition (A1-5) was clearly smaller than the amount when the general plasticizer BBSA (N-butylbenzenesulfonamide) was used.

### [Reference Example 6]

### Production of polyamide 12 composition (A1-6)

The production of the polyamide 12 composition (A1-1) was repeated except that the amounts added of the polyamide 12 (A-1), the phosphinic acid metal salt (B-1) and the cyclic phosphazene compound (C-1) were changed. Thus, 100 parts by mass of pellets of a polyamide 12 composition were obtained that included the polyamide 12 (A-1)/the phosphinic acid metal salt (B-1)/the cyclic phosphazene compound (C-1) = 83.7/10.0/6.3 (mass%). (This polyamide 12 composition will be written as the "polyamide composition (A1-6)" hereinbelow.) The amount of vapor generated during the production of the polyamide composition (A1-6) was clearly smaller than the amount when the general plasticizer BBSA (N-butylbenzenesulfonamide) was used.

### [Reference Example 7]

### Production of polyamide 12 composition (A1-7)

The production of the polyamide 12 composition (A1-1) was repeated except that the amounts added of the polyamide 12 (A-1), the phosphinic acid metal salt (B-1) and the cyclic phosphazene compound (C-1) were changed. Thus, 100 parts by mass of pellets of a polyamide 12 composition were obtained that included the polyamide 12 (A-1)/the phosphinic acid metal salt (B-1)/the cyclic phosphazene compound (C-1) = 80.7/13.0/6.3 (mass%). (This polyamide 12 composition will be written as the "polyamide composition (A1-7)" hereinbelow.) The amount of vapor generated during the production of the polyamide composition (A1-7) was clearly smaller than the amount when the general plasticizer BBSA (N-butylbenzenesulfonamide) was used.

### [Reference Example 8]

### Production of polyamide 12 composition (A1-8)

The production of the polyamide 12 composition (A1-1) was repeated except that the amounts added of the polyamide 12 (A-1), the phosphinic acid metal salt (B-1) and the cyclic phosphazene compound (C-1) were changed. Thus, 100 parts by mass of pellets of a polyamide 12 composition were obtained that included the polyamide 12 (A-1)/the phosphinic acid metal salt (B-1)/the cyclic phosphazene compound (C-1) = 80.0/10.0/10.0 (mass%). (This polyamide 12 composition will be written as the "polyamide composition (A1-7)" hereinbelow.) The amount of vapor generated during the production of the polyamide composition (A1-7) was clearly smaller than the amount when the general plasticizer BBSA (N-butylbenzenesulfonamide) was used.

### [Comparative Example 1]

### Production of polyamide 12 composition (A2-1)

The production of the polyamide 12 composition (A1-1) was repeated except that the cyclic phosphazene compound (C-1) was not used. Thus, 100 parts by mass of pellets of a polyamide 12 composition were obtained that included the polyamide 12 (A-1)/the phosphinic acid metal salt (B-1) = 81.3118.7 (mass%). (This polyamide 12 composition will be written as the "polyamide composition (A2-1)" hereinbelow.) The amount of vapor generated during the production of the polyamide composition (A2-1) was clearly smaller than the amount expected when the general plasticizer BBSA (N-butylbenzenesulfonamide) was used.

### [Comparative Example 2]

### Production of polyamide 12 composition (A2-2)

The production of the polyamide 12 composition (A1-1) was repeated except that the cyclic phosphazene compound (C-1) was replaced by melamine polyphosphate (H-1). Thus, 100 parts by mass of pellets of a polyamide 12 composition were obtained that included the polyamide 12 (A-1)/the phosphinic acid metal salt (B-1)/melamine polyphosphate (H-1) = 78.3/18.7/3.0 (mass%). (This polyamide 12 composition will be written as the "polyamide composition (A2-2)" hereinbelow.) The amount of vapor generated during the production of the polyamide composition (A2-2) was clearly smaller than the amount when the general plasticizer BBSA (N-butylbenzenesulfonamide) was used.

### [Comparative Example 3]

### Production of polyamide 12 composition (A2-3)

The production of the polyamide 12 composition (A1-1) was repeated except that the cyclic phosphazene compound (C-1) was replaced by melamine cyanurate (H-2). Thus, 100 parts by mass of pellets of a polyamide 12 composition were obtained that included the polyamide 12 (A-1)/the phosphinic acid metal salt (B-1)/melamine cyanurate (H-2) = 78.3/18.7/3.0 (mass%). (This polyamide 12 composition will be written as the "polyamide composition (A2-3)" hereinbelow.) The amount of vapor generated during the production of the polyamide composition (A2-3) was clearly smaller than the amount when the general plasticizer BBSA (N-butylbenzenesulfonamide) was used.

The polyamide resin compositions of Reference Examples 1 and 6 to 8, Examples 2 to 5 and Comparative Examples 1 to 3 were tested by the following methods to evaluate characteristics. The results are described in Table 1.

### [Characteristics measurement methods]

### [Relative viscosity]

The relative viscosity was measured in 96% sulfuric acid with 1% polyamide concentration at a temperature of 25°C in accordance with the test procedure described in JIS K-6920.

### [Tensile elongation at break]

The tensile elongation at break was measured by performing a tensile test in accordance with the test procedure described in ISO 527-1 and 2 except that the tensile test speed was changed to 5 mm/min. The composition was evaluated as having sufficient mechanical properties when the tensile elongation at break was 35% or more.

### [Combustion test (UL94-equivalent test)]

A 1/16-inch thick test piece was subjected to a combustion test in accordance with the test procedure described in UL94. The test piece was evaluated as "V-0", "V-2" or "out of specification" based on the UL94 standards.

### [Surface properties]

The strand of the polyamide resin composition extruded from the twin-screw melt-kneader was collected, and surface properties were measured visually and tactually. The surface properties were evaluated as O when the strand was free from any protrusions, as Δ when the strand had several protrusions, and as X when many protrusions were found on the strand.

### [MFR (melt flow rate)]

The MFR (melt flow rate) was measured under 190°C and 1,000 g conditions in accordance with the test procedure described in ISO 1133. The composition was evaluated as having sufficient melt characteristics when the MFR was 5.0 or more.

### [Oxygen index]

The oxygen index was measured in accordance with the test procedure described in ISO 4589-2. The composition was evaluated as having sufficient flame retardancy when the oxygen index was 30% or more.

**[Table 1]**

| | Polyamide resin composition | Composition (mass%) | | | | | Tensile elongation at break [%] | Combustion test (UL-equivalen test) | Surface properties | MFR (190 °C, 1,000 g) [g/10 min] | Oxygen index [%] |
|---|---|---|---|---|---|---|---|---|---|---|---|
| | | A-1 | B-1 | C-1 | H-1 | H-2 | | | | | |
| | | PA12 Relative viscosity =1.67 | Exolit OP 1230 | Rabitle FP-110 | Melapur 200 70 | MC-60 00 | | | | | |
| Reference Example 1 | A1-1 | 78.3 | 18.7 | 3.0 | 0.0 | 0.0 | 42 | V-0 | O | 5.3 | 35.0 |
| Example 2 | A1-2 | 75.0 | 18.7 | 6.3 | 0.0 | 0.0 | 49 | V-0 | O | 6.0 | 37.0 |
| Example 3 | A1-3 | 71.3 | 18.7 | 10.0 | 0.0 | 0.0 | 90 | V-0 | O | 6.8 | 38.0 |
| Example 4 | A1-4 | 66.3 | 18.7 | 15.0 | 0.0 | 0.0 | 89 | V-0 | O | 7.2 | 37.1 |
| Example 5 | A1-5 | 77.7 | 16.0 | 6.3 | 0.0 | 0.0 | 141 | V-0 | O | 6.6 | 33.4 |
| Reference Example 6 | A1-6 | 83.7 | 10.0 | 6.3 | 0.0 | 0.0 | 200 | V-2 | O | 8.7 | 24.4 |
| Reference Example 7 | A1-7 | 80.7 | 13.0 | 6.3 | 0.0 | 0.0 | 164 | V-2 | O | 7.6 | 28.5 |
| Reference Example 8 | A1-8 | 80.0 | 10.0 | 10.0 | 0.0 | 0.0 | 184 | V-2 | O | 9.5 | 27.2 |
| Comparative Example 1 | A2-1 | 81.3 | 18.7 | 0.0 | 0.0 | 0.0 | 27 | V-0 | X | 5.3 | 34.5 |
| Comparative Example 2 | A2-2 | 78.3 | 18.7 | 0.0 | 3.0 | 0.0 | 9 | V-2 | X | 4.3 | 30.6 |
| Comparative Example 3 | A2-3 | 78.3 | 18.7 | 0.0 | 0.0 | 3.0 | 7 | V-2 | X | 3.9 | 34.0 |

As clear from Table 1, the polyamide composition of Comparative Example 1 that contained no phosphazene compounds (C) was inferior in mechanical properties. Further, the polyamide compositions of Comparative Examples 2 and 3 that contained a flame retardant other than the phosphazene compound (C) were inferior in mechanical properties. In contrast, the polyamide compositions of Reference Examples 1 and 6 to 8 and Examples 2 to 5 showed good results in mechanical properties and the combustion test. Further, the polyamide compositions of Reference Example 1 and Examples 2 to 5 attained good results in surface properties, mechanical properties, melt characteristics, the combustion test and the oxygen index test.

### [Example 9]

### Production of polyamide resin composition (A1-9)

The polyamide 12 (A-2) was mixed together beforehand with the phosphinic acid metal salt (B-2), the cyclic phosphazene compound (C-1), the elastomer polymer (D-1) and the phosphorus-containing polymer compound (E-1). The mixture was supplied to a twin-screw melt-kneader (model: TEX44, manufactured by The Japan Steel Works, LTD.) and was melt-kneaded at a cylinder temperature of 210°C to 230°C. The molten resin was extruded into a strand, which was then introduced into a water tank, cooled, cut and vacuum dried. Thus, 100 parts by mass of pellets of a polyamide 12 composition were obtained that included the polyamide 12 (A-2)/ the phosphinic acid metal salt (B-2)/the cyclic phosphazene compound (C-1)/the elastomer polymer (D-1)/the phosphorus-containing polymer compound (E-1) = 65.00/18.75/6.25/5.00/5.00 (mass%). (This polyamide 12 composition will be written as the "polyamide resin composition (A1-9)" hereinbelow.)

### [Reference Example 10]

### Production of polyamide resin composition (A1-10)

The procedure in Example 9 was repeated except that the amounts added of the polyamide 12 (A-2) and the phosphinic acid metal salt (B-2) were changed. Thus, 100 parts by mass of pellets of a polyamide 12 composition were obtained that included the polyamide 12 (A-2)/the phosphinic acid metal salt (B-2)/the cyclic phosphazene compound (C-1)/the elastomer polymer (D-1)/the phosphorus-containing polymer compound (E-1) = 73.75/10.00/6.25/5.00/5.00 (mass%). (This polyamide 12 composition will be written as the "polyamide resin composition (A1-10)" hereinbelow.)

### [Comparative Example 4]

### Production of polyamide resin composition (A2-4)

The procedure in Example 9 was repeated except that the cyclic phosphazene compound (C-1) was not used and the amount of the polyamide 12 (A-2) was correspondingly increased. Thus, 100 parts by mass of pellets of a polyamide 12 composition were obtained that included the polyamide 12 (A-2)/the phosphinic acid metal salt (B-2)/the elastomer polymer (D-1)/the phosphorus-containing polymer compound (E-1) = 71.25/18.75/5.00/5.00 (mass%). (This polyamide 12 composition will be written as the "polyamide resin composition (A2-4)" hereinbelow.)

### [Comparative Example 5]

### Production of polyamide resin composition (A2-5)

Comparative Example 5 relates to a polyamide resin composition produced based on Japanese Patent Application Kokai Publication No. 2017-43762 and containing no phosphazene compounds (C). The polyamide 12 (A-2) and the phosphinic acid metal salt (B-2) were mixed together beforehand. The mixture was supplied to a twin-screw melt-kneader (model: TEX44, manufactured by The Japan Steel Works, LTD.), while the plasticizer (I-1) was injected through a metering pump at some midpoint in the cylinder of the twin-screw melt-kneader. The materials were melt-kneaded at a cylinder temperature of 210°C to 230°C. The molten resin was extruded into a strand, which was then introduced into a water tank, cooled, cut and vacuum dried. Thus, 100 parts by mass of pellets of a polyamide 12 composition were obtained that included the polyamide 12 (A-2)/the phosphinic acid metal salt (B-2)/the plasticizer (I-1) = 66.00/25.00/9.00 (mass%). (This polyamide 12 composition will be written as the "polyamide resin composition (A2-5)" hereinbelow.)

### [Example 11]

### Production of polyamide resin composition (A1-11)

The polyamide 12 (A-2) was mixed together beforehand with the core-shell rubber-type graft copolymer (F-1), the phosphinic acid metal salt (B-2) and the cyclic phosphazene compound (C-1). The mixture was supplied to a twin-screw melt-kneader (model: TEX44, manufactured by The Japan Steel Works, LTD.) and was melt-kneaded at a cylinder temperature of 210°C to 230°C. The molten resin was extruded into a strand, which was then introduced into a water tank, cooled, cut and vacuum dried. Thus, 100 parts by mass of pellets of a polyamide 12 composition were obtained that included the polyamide 12 (A-2)/the phosphinic acid metal salt (B-2)/the cyclic phosphazene compound (C-1)/the core-shell rubber-type graft copolymer (F-1) = 70.00/18.75/6.25/5.00 (mass%). (This polyamide 12 composition will be written as the "polyamide resin composition (A1-11)" hereinbelow.)

### [Example 12]

### Production of polyamide resin composition (A1-12)

The procedure in Example 11 was repeated except that the additional impact modifier (G-1) was further used and the amount of the polyamide 12 (A-2) was changed. Thus, 100 parts by mass of pellets of a polyamide 12 composition were obtained that included the polyamide 12 (A-2)/the phosphinic acid metal salt (B-2)/the cyclic phosphazene compound (C-1)/the core-shell rubber-type graft copolymer (F-1)/the additional impact modifier (G-1) = 67.00/18.75/6.25/5.00/3.00 (mass%). (This polyamide 12 composition will be written as the "polyamide resin composition (A1-12)" hereinbelow.)

### [Example 13]

### Production of polyamide resin composition (A1-13)

The procedure in Example 11 was repeated except that the additional flame retardant (H-3) was further used and the amount of the polyamide 12 (A-2) was changed. Thus, 100 parts by mass of pellets of a polyamide 12 composition were obtained that included the polyamide 12 (A-2)/the phosphinic acid metal salt (B-2)/the cyclic phosphazene compound (C-1)/the core-shell rubber-type graft copolymer (F-1)/the additional flame retardant (H-3) = 65.00/18.75/6.25/5.00/5.00 (mass%). (This polyamide 12 composition will be written as the "polyamide resin composition (A1-13)" hereinbelow.)

### [Example 14]

### Production of polyamide resin composition (A1-14)

The procedure in Example 11 was repeated except that the amounts added of the polyamide 12 (A-2) and the core-shell rubber-type graft copolymer (F-1) were changed. Thus, 100 parts by mass of pellets of a polyamide 12 composition were obtained that included the polyamide 12 (A-2)/the phosphinic acid metal salt (B-2)/the cyclic phosphazene compound (C-1)/the core-shell rubber-type graft copolymer (F-1) = 65.00/18.75/6.25/10.00 (mass%). (This polyamide 12 composition will be written as the "polyamide resin composition (A1-14)" hereinbelow.)

### [Example 15]

### Production of polyamide resin composition (A1-15)

The procedure in Example 11 was repeated except that the core-shell rubber-type graft copolymer (F-1) was not used and the amount of the polyamide 12 (A-2) was changed. Thus, 100 parts by mass of pellets of a polyamide 12 composition were obtained that included the polyamide 12 (A-2)/the phosphinic acid metal salt (B-2)/the cyclic phosphazene compound (C-1) = 75.00/18.75/6.25 (mass%). (This polyamide 12 composition will be written as the "polyamide resin composition (A1-15)" hereinbelow.)

The polyamide resin compositions of Examples 9 and 11 to 15, Reference Example 10 and Comparative Examples 4 and 5 were tested by the following methods to evaluate characteristics. The results are described in Tables 2 to 4.

### [Characteristics measurement methods]

### [Test piece preparation]

The pellets of Examples 9 and 11 to 15, Reference Example 10 and Comparative Examples 4 and 5 were each injection molded under the conditions described below to give test pieces conforming to the respective tests.

### <Injection molding conditions>

Cylinder temperature: 270°C
Mold temperature: 80°C
Average in-mold injection speed: 50 mm/sec
Cooling time: 5 seconds

### [Combustion test (UL94-equivalent test)]

A 1/16-inch thick test piece was subjected to a combustion test in accordance with the test procedure described in UL94. The test piece was evaluated as "V-0", "V-2" or "out of specification" based on the UL94 standards.

### [Tensile elongation at break]

The tensile elongation at break was measured by performing a tensile test in accordance with the test procedure described in ISO 527-1 and 2. The composition was evaluated as having sufficient mechanical properties when the tensile elongation at break was 35% or more. The composition was evaluated as having highly sufficient mechanical properties when the tensile elongation at break was 100% or more. The composition was evaluated as having very sufficient mechanical properties when the tensile elongation at break was 130% or more.

### [Oxygen index]

The oxygen index was measured in accordance with the test procedure described in ISO 4589-2. The composition was evaluated as having sufficient flame retardancy when the oxygen index was 30% or more.

Hollow shaping (tube-forming) properties were evaluated by the following method.

### [Tube extrusion]

The polyamide resin compositions of Examples 9 and 11 to 15, Reference Example 10 and Comparative Examples 4 and 5 were each extruded with single-layer tube-forming machine PAL32 (manufactured by Maillefer SA) into a tubular body. The extrusion machine was set to 190°C to 210°C. The target outer diameter was 8 mm and the target thickness was 1 mm. The composition was evaluated as having good tube-forming properties when the dimensional deviations in outer diameter and thickness were 0.1 mm or less.

The hollow molded bodies (the tubes) of Example 11 and Comparative Example 5 were tested by the following methods to evaluate the tensile elongation at break and the low-temperature impact resistance.

### [Tensile elongation at break (tubes)]

The tubes obtained by "Tube extrusion" were subjected to a tensile test in accordance with the test procedure described in SAE J 2260, and the tensile elongation at break of the tube was measured.

### [Low-temperature impact resistance (tubes)]

The tubes obtained by "Tube extrusion" were subjected to a low-temperature impact resistance test at -40°C and -60°C in accordance with the test procedure described in SAE J 2260. The tubes were then inspected for any cracks. The results are described as the number of cracked tubes/the number of the tested tubes.

**[Table 2]**

| | Polyamide resin composition | Materials used (mass%) | | | | | | Combustion test UL V | Tensile elongation at break % | Oxygen index % | Tube-forming properties |
|---|---|---|---|---|---|---|---|---|---|---|---|
| | | A-2 | B-2 | C-1 | D-1 | E-1 | I-1 | | | | |
| | | UBESTA PA12 Relative viscosity =2.26 | Exolit OP 935 | Rabitle FP-110 | TAFMER MH5010 | ME-P8 | BBSA | | | | |
| Example 9 | A1-9 | 65. 00 | 18.75 | 6. 25 | 5.00 | 5.00 | - | V-2 | 164 | 36. 9 | O |
| Reference Example 10 | A1-10 | 73. 75 | 10.00 | 6.25 | 5.00 | 5.00 | - | V-2 | 161 | 26. 4 | O |
| Comparative Example 4 | A2-4 | 71. 25 | 18.75 | - | 5.00 | 5.00 | - | V-2 | 12 | 33. 6 | X |
| Comparative Example 5 | A2-5 | 6600 | 25.00 | - | - | - | 9.00 | Out of specification | 202 | 31.0 | O |

From Table 2, the polyamide resin composition of Comparative Example 4 containing no phosphazene compounds (C) was inferior in mechanical properties and tube-forming properties. The polyamide resin composition of Comparative Example 5 produced based on Japanese Patent Application Kokai Publication No. 2017-43762 was out of specification in the combustion test and was inferior in flame retardancy.

In contrast, the polyamide resin composition of Example 9 showed good results in all of the combustion test, the oxygen index, the tensile elongation at break and the tube-forming properties. Further, the polyamide resin composition of Reference Example 10 showed good results in the combustion test and the tensile elongation at break. Here, the polyamide resin compositions of Example 9 and Reference Example 10 had a tensile elongation at break of 130% or more and thus had very sufficient mechanical properties.

**[Table 3]**

| | Polyamide resin composition | Materials used (mass%) | | | | | | Combustion test UL V | Tensile elongation at break % |
|---|---|---|---|---|---|---|---|---|---|
| | | A-2 | B-2 | C-1 | F-1 | G-1 | H-3 | | |
| | | UBESTA PA12 Relative viscosity =2.26 | Exolit OP 935 | Rabitle FP-110 | METABLEN SX-005 | TAFMER MH5010 | ME-P8 | | |
| Example 11 | A1-11 | 70. 00 | 18. 75 | 6. 25 | 5.00 | - | - | V-0 | 163 |
| Example 12 | A1-12 | 67.00 | 18. 75 | 6. 25 | 5.00 | 3.00 | - | V-0 | 159 |
| Example 13 | A1-13 | 65. 00 | 18. 75 | 6. 25 | 5.00 | - | 5.00 | V-0 | 174 |
| Example 14 | A1-14 | 65. 00 | 18. 75 | 6. 25 | 10. 00 | - | - | V-2 | 167 |
| Example 15 | A1-15 | 75. 00 | 18. 75 | 6. 25 | - | - | - | V-2 | 116 |

**[Table 4]**

| | Polyamide resin composition | Tensile elongation at break % | Low-temperature impact resistance (-40°C) | Low-temperature impact resistance (-60°C) |
|---|---|---|---|---|
| Example 11 | A1-11 | 260 | 0/10 | 0/10 |
| Comparative Example 5 | A2-5 | 300 | 10/10 | 10/10 |

From Table 3, the polyamide resin compositions of Examples 11 to 15 showed good results in the combustion test and the mechanical properties. Here, the polyamide resin compositions of Examples 11 to 14 had a tensile elongation at break of 130% or more and thus had very sufficient mechanical properties. Further, the polyamide resin composition of Example 15 had a tensile elongation at break of 100% or more and thus had highly sufficient mechanical properties. Furthermore, from Table 4, the polyamide resin composition of Example 11 is excellent in mechanical properties and also in low-temperature impact resistance as tubes. In contrast, the tubes of Comparative Example 5 were cracked in the low-temperature impact resistance test.

## Claims

1. A polyamide resin composition comprising an aliphatic polyamide (A), a phosphinic acid salt (B) and a phosphazene compound (C), wherein
the aliphatic polyamide (A) is an aliphatic polyamide having a ratio of the number of methylene groups to the number of amide groups of 5.0 or more,
the aliphatic polyamide (A) is contained in an amount of 60 mass% or more and 79 mass% or less based on 100 mass% of the polyamide resin composition,
the phosphinic acid salt (B) is contained in an amount of 16 mass% or more and 20 mass% or less based on 100 mass% of the polyamide resin composition,
the phosphazene compound (C) is contained in an amount of 5 mass% or more and 20 mass% or less based on 100 mass% of the polyamide resin composition, and
the phosphazene compound (C) is a cyclic phosphazene compound.

2. The polyamide resin composition according to claim 1, wherein the polyamide resin composition further comprises an elastomer polymer (D) and a phosphorus-containing polymer compound (E), wherein the elastomer polymer (D) is not a core-shell rubber-type graft copolymer (F).

3. The polyamide resin composition according to claim 2, wherein the elastomer polymer (D) contains a structural unit derived from an unsaturated compound having a carboxyl group and/or an acid anhydride group.

4. The polyamide resin composition according to claim 2 or 3, wherein the aliphatic polyamide (A) is contained in an amount of 60 mass% or more and 76 mass% or less based on 100 mass% of the polyamide resin composition, and the elastomer polymer (D) is contained in an amount of 3 mass% or more and 15 mass% or less based on 100 mass% of the polyamide resin composition.

5. The polyamide resin composition according to any one of claims 2 to 4, wherein the phosphorus-containing polymer compound (E) is represented by the following formula (5): 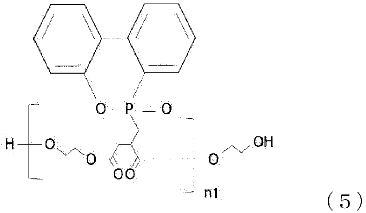 wherein n1 is an integer of 4 or greater.

6. The polyamide resin composition according to any one of claims 2 to 5, wherein the aliphatic polyamide (A) is contained in an amount of 60 mass% or more and 76 mass% or less based on 100 mass% of the polyamide resin composition, and the phosphorus-containing polymer compound (E) is contained in an amount of 3 mass% or more and 10 mass% or less based on 100 mass% of the polyamide resin composition.

7. The polyamide resin composition according to any one of claims 2 to 6, wherein the phosphazene compound (C) is contained in an amount of 5 mass% or more and 10 mass% or less based on 100 mass% of the polyamide resin composition.

8. The polyamide resin composition according to claim 1, which further comprises a core-shell rubber-type graft copolymer (F).

9. The polyamide resin composition according to claim 8, wherein the core-shell rubber-type graft copolymer (F) is a silicone based copolymer.

10. The polyamide resin composition according to claim 8 or 9, wherein the core-shell rubber-type graft copolymer (F) is contained in an amount of 2 mass% or more and 15 mass% or less based on 100 mass% of the polyamide resin composition, wherein the aliphatic polyamide (A) is contained in an amount of 60 mass% or more and 76 mass% or less based on 100 mass% of the polyamide resin composition.

11. The polyamide resin composition according to any one of claims 8 to 10, which comprises an impact modifier (G) other than the component (F) in an amount of 10 mass% or less based on 100 mass% of the polyamide resin composition.

12. The polyamide resin composition according to any one of claims 8 to 11, which comprises a flame retardant (H) other than the components (B) and (C) in an amount of 10 mass% or less based on 100 mass% of the polyamide resin composition.

13. The polyamide resin composition according to any one of claims 8 to 12, wherein the phosphazene compound (C) is contained in an amount of 5 mass% or more and 10 mass% or less based on 100 mass% of the polyamide resin composition.

14. The polyamide resin composition according to any one of claims 1 to 13, wherein the phosphazene compound (C) is represented by the following formula (3): 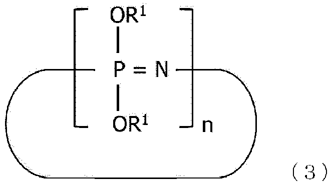 wherein n indicates an integer of 3 to 25, and the plurality of R¹ denote unsubstituted or substituted aryl groups that are the same as or different from one another, with the proviso that the proportion of unsubstituted aryl groups is 0.1 to 100 mol% relative to the total of the groups R¹.

15. The polyamide resin composition according to any one of claims 1 to 14, wherein the aliphatic polyamide (A) comprises at least one homopolymer selected from the group consisting of polyamide 11, polyamide 12, polyamide 612, polyamide 1010, polyamide 1012 and polyamide 1212, and/or at least one copolymer formed using two or more kinds of raw material monomers for the above homopolymers.

16. A molded body comprising the polyamide resin composition according to any one of claims 1 to 15.

17. A hollow molded body formed from the polyamide resin composition according to any one of claims 1 to 15.

18. The hollow molded body according to claim 17 formed by an extrusion method.

## Patentansprüche

1. Polyamidharzzusammensetzung, umfassend ein aliphatisches Polyamid (A), ein Phosphinsäuresalz (B) und eine Phosphazeneverbindung (C), wobei
das aliphatische Polyamid (A) ein aliphatisches Polyamid ist, das ein Verhältnis der Anzahl der Methylengruppen zur Anzahl der Amidgruppen von 5,0 oder mehr aufweist,
das aliphatische Polyamid (A) in einer Menge von 60 Massen-% oder mehr und 79 Massen-% oder weniger, bezogen auf 100 Massen-% der Polyamidharzzusammensetzung, enthalten ist,
das Phosphinsäuresalz (B) in einer Menge von 16 Massen-% oder mehr und 20 Massen-% oder weniger, bezogen auf 100 Massen-% der Polyamidharzzusammensetzung, enthalten ist,
die Phosphazeneverbindung (C) in einer Menge von 5 Massen-% oder mehr und 20 Massen-% oder weniger, bezogen auf 100 Massen-% der Polyamidharzzusammensetzung, enthalten ist, und
die Phosphazeneverbindung (C) eine cyclische Phosphazeneverbindung ist.

2. Polyamidharzzusammensetzung nach Anspruch 1, wobei die Polyamidharzzusammensetzung weiter ein Elastomerpolymer (D) und eine phosphorhaltige Polymerverbindung (E) umfasst, wobei das Elastomerpolymer (D) kein Kern-Schale-Kautschuk-Pfropfcopolymer (F) ist.

3. Polyamidharzzusammensetzung nach Anspruch 2, wobei das Elastomerpolymer (D) eine Struktureinheit enthält, die von einer ungesättigten Verbindung mit einer Carboxylgruppe und/oder einer Säureanhydridgruppe abgeleitet ist.

4. Polyamidharzzusammensetzung nach Anspruch 2 oder 3, wobei das aliphatische Polyamid (A) in einer Menge von 60 Massen-% oder mehr und 76 Massen-% oder weniger, bezogen auf 100 Massen-% der Polyamidharzzusammensetzung, enthalten ist und das Elastomerpolymer (D) in einer Menge von 3 Massen-% oder mehr und 15 Massen-% oder weniger, bezogen auf 100 Massen-% der Polyamidharzzusammensetzung, enthalten ist.

5. Polyamidharzzusammensetzung nach einem der Ansprüche 2 bis 4, wobei die phosphorhaltige Polymerverbindung (E) durch die folgende Formel (5) dargestellt ist: 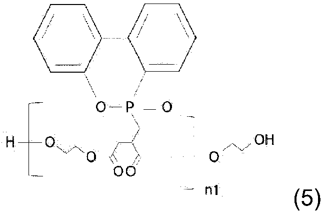 wobei n1 eine ganze Zahl von 4 oder größer ist.

6. Polyamidharzzusammensetzung nach einem der Ansprüche 2 bis 5, wobei das aliphatische Polyamid (A) in einer Menge von 60 Massen-% oder mehr und 76 Massen-% oder weniger, bezogen auf 100 Massen-% der Polyamidharzzusammensetzung, enthalten ist und die phosphorhaltige Polymerverbindung (E) in einer Menge von 3 Massen-% oder mehr und 10 Massen-% oder weniger, bezogen auf 100 Massen-% der Polyamidharzzusammensetzung, enthalten ist.

7. Polyamidharzzusammensetzung nach einem der Ansprüche 2 bis 6, wobei die Phosphazeneverbindung (C) in einer Menge von 5 Massen-% oder mehr und 10 Massen-% oder weniger, bezogen auf 100 Massen-% der Polyamidharzzusammensetzung, enthalten ist.

8. Polyamidharzzusammensetzung nach Anspruch 1, die weiter ein Kern-Schale-Kautschuk-Pfropfcopolymer (F) umfasst.

9. Polyamidharzzusammensetzung nach Anspruch 8, wobei das Kern-Schale-Kautschuk-Pfropfcopolymer (F) ein silikonbasiertes Copolymer ist.

10. Polyamidharzzusammensetzung nach Anspruch 8 oder 9, wobei das Kern-Schale-Kautschuk-Pfropfcopolymer (F) in einer Menge von 2 Massen-% oder mehr und 15 Massen-% oder weniger, bezogen auf 100 Massen-% der Polyamidharzzusammensetzung, enthalten ist, wobei das aliphatische Polyamid (A) in einer Menge von 60 Massen-% oder mehr und 76 Massen-% oder weniger, bezogen auf 100 Massen-% der Polyamidharzzusammensetzung, enthalten ist.

11. Polyamidharzzusammensetzung nach einem der Ansprüche 8 bis 10, die einen Schlagzähigkeitsmodifikator (G) außer der Komponente (F) in einer Menge von 10 Massen-% oder weniger, bezogen auf 100 Massen-% der Polyamidharzzusammensetzung, umfasst.

12. Polyamidharzzusammensetzung nach einem der Ansprüche 8 bis 11, die ein Flammschutzmittel (H) außer den Komponenten (B) und (C) in einer Menge von 10 Massen-% oder weniger, bezogen auf 100 Massen-% der Polyamidharzzusammensetzung, umfasst.

13. Polyamidharzzusammensetzung nach einem der Ansprüche 8 bis 12, wobei die Phosphazeneverbindung (C) in einer Menge von 5 Massen-% oder mehr und 10 Massen-% oder weniger, bezogen auf 100 Massen-% der Polyamidharzzusammensetzung, enthalten ist.

14. Polyamidharzzusammensetzung nach einem der Ansprüche 1 bis 13, wobei die Phosphazeneverbindung (C) durch die folgende Formel (3) dargestellt ist: 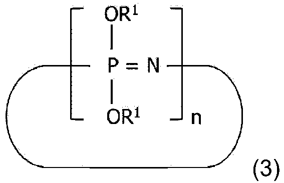 wobei n eine ganze Zahl von 3 bis 25 bezeichnet und die Vielzahl von R¹ unsubstituierte oder substituierte Arylgruppen bedeuten, die gleich oder verschieden voneinander sind, mit der Maßgabe, dass der Anteil unsubstituierter Arylgruppen 0,1 bis 100 Mol-% relativ zu der Summe der Gruppen R¹ beträgt.

15. Polyamidharzzusammensetzung nach einem der Ansprüche 1 bis 14, wobei das aliphatische Polyamid (A) mindestens ein Homopolymer umfasst, ausgewählt aus der Gruppe bestehend aus Polyamid 11, Polyamid 12, Polyamid 612, Polyamid 1010, Polyamid 1012 und Polyamid 1212, und/oder mindestens ein Copolymer, das unter Verwendung von zwei oder mehr Arten von Rohmaterialmonomeren für die oben genannten Homopolymere gebildet ist.

16. Formkörper, umfassend die Polyamidharzzusammensetzung nach einem der Ansprüche 1 bis 15.

17. Hohlformkörper, der aus der Polyamidharzzusammensetzung nach einem der Ansprüche 1 bis 15 gebildet ist.

18. Hohlformkörper nach Anspruch 17, der durch ein Extrusionsverfahren gebildet ist.

## Revendications

1. Composition de résine de polyamide comprenant un polyamide aliphatique (A), un sel d'acide phosphinique (B) et un composé de phosphazène (C), dans laquelle
le polyamide aliphatique (A) est un polyamide aliphatique présentant un rapport entre le nombre de groupes méthylène et le nombre de groupes amide de 5,0 ou plus,
le polyamide aliphatique (A) est contenu en une quantité de 60 % en masse ou plus et de 79 % en masse ou moins, sur la base de 100 % en masse de la composition de résine de polyamide,
le sel d'acide phosphinique (B) est contenu en une quantité de 16 % en masse ou plus et de 20 % en masse ou moins, sur la base de 100 % en masse de la composition de résine de polyamide,
le composé de phosphazène (C) est contenu en une quantité de 5 % en masse ou plus et de 20 % en masse ou moins, sur la base de 100 % en masse de la composition de résine de polyamide, et
le composé de phosphazène (C) est un composé de phosphazène cyclique.

2. Composition de résine de polyamide selon la revendication 1, dans laquelle la composition de résine de polyamide comprend en outre un polymère élastomère (D) et un composé polymère contenant du phosphore (E), dans laquelle le polymère élastomère (D) n'est pas un copolymère greffé de type caoutchouc à structure cœur-enveloppe (F).

3. Composition de résine de polyamide selon la revendication 2, dans laquelle le polymère élastomère (D) contient un motif structurel dérivé d'un composé insaturé présentant un groupe carboxyle et/ou un groupe anhydride acide.

4. Composition de résine de polyamide selon la revendication 2 ou la revendication 3, dans laquelle le polyamide aliphatique (A) est contenu en une quantité de 60 % en masse ou plus et de 76 % en masse ou moins, sur la base de 100 % en masse de la composition de résine de polyamide, et le polymère élastomère (D) est contenu en une quantité de 3 % en masse ou plus et de 15 % en masse ou moins, sur la base de 100 % en masse de la composition de résine de polyamide.

5. Composition de résine de polyamide selon l'une quelconque des revendications 2 à 4, dans laquelle le composé polymère contenant du phosphore (E) est représenté par la formule suivante (5) : 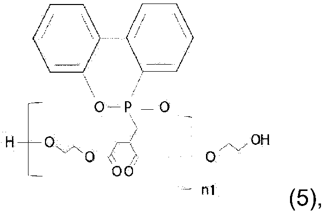 dans laquelle n1 est un nombre entier supérieur ou égal à 4.

6. Composition de résine de polyamide selon l'une quelconque des revendications 2 à 5, dans laquelle le polyamide aliphatique (A) est contenu en une quantité de 60 % en masse ou plus et de 76 % en masse ou moins, sur la base de 100 % en masse de la composition de résine de polyamide, et le composé polymère contenant du phosphore (E) est contenu en une quantité de 3 % en masse ou plus et de 10 % en masse ou moins, sur la base de 100 % en masse de la composition de résine de polyamide.

7. Composition de résine de polyamide selon l'une quelconque des revendications 2 à 6, dans laquelle le composé de phosphazène (C) est contenu en une quantité de 5 % en masse ou plus et de 10 % en masse ou moins, sur la base de 100 % en masse de la composition de résine de polyamide.

8. Composition de résine de polyamide selon la revendication 1, qui comprend en outre un copolymère greffé de type caoutchouc à structure cœur-enveloppe (F).

9. Composition de résine de polyamide selon la revendication 8, dans laquelle le copolymère greffé de type caoutchouc à structure cœur-enveloppe (F) est un copolymère à base de silicone.

10. Composition de résine de polyamide selon la revendication 8 ou 9, dans laquelle le copolymère greffé de type caoutchouc à structure cœur-enveloppe (F) est contenu en une quantité de 2 % en masse ou plus et de 15 % en masse ou moins, sur la base de 100 % en masse de la composition de résine de polyamide, dans laquelle le polyamide aliphatique (A) est contenu en une quantité de 60 % en masse ou plus et de 76 % en masse ou moins, sur la base de 100 % en masse de la composition de résine de polyamide.

11. Composition de résine de polyamide selon l'une quelconque des revendications 8 à 10, qui comprend un modifiant de résistance au choc (G) autre que le composant (F), en une quantité de 10 % en masse ou moins, sur la base de 100 % en masse de la composition de résine de polyamide.

12. Composition de résine de polyamide selon l'une quelconque des revendications 8 à 11, qui comprend un agent ignifuge (H) autre que les composants (B) et (C) en une quantité de 10 % en masse ou moins, sur la base de 100 % en masse de la composition de résine de polyamide.

13. Composition de résine de polyamide selon l'une quelconque des revendications 8 à 12, dans laquelle le composé de phosphazène (C) est contenu en une quantité de 5 % en masse ou plus et de 10 % en masse ou moins, sur la base de 100 % en masse de la composition de résine de polyamide.

14. Composition de résine de polyamide selon l'une quelconque des revendications 1 à 13, dans laquelle le composé de phosphazène (C) est représenté par la formule suivante (3) : 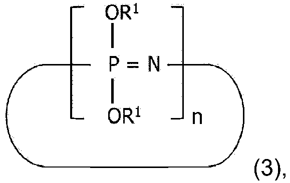 dans laquelle n représente un nombre entier de 3 à 25, et la pluralité de R¹ désigne des groupes aryle substitués ou non substitués qui sont identiques ou différents les uns des autres, à condition que la proportion de groupes aryle non substitués soit de 0,1 à 100 % en moles par rapport au total des groupes R¹.

15. Composition de résine de polyamide selon l'une quelconque des revendications 1 à 14, dans laquelle le polyamide aliphatique (A) comprend au moins un homopolymère sélectionné parmi le groupe consistant en le polyamide 11, le polyamide 12, le polyamide 612, le polyamide 1010, le polyamide 1012 et le polyamide 1212, et/ou au moins un copolymère formé en utilisant deux ou plusieurs types de monomères de matières premières pour les homopolymères susmentionnés.

16. Corps moulé comprenant la composition de résine de polyamide selon l'une quelconque des revendications 1 à 15.

17. Corps moulé creux formé à partir de la composition de résine de polyamide selon l'une quelconque des revendications 1 à 15.

18. Corps moulé creux selon la revendication 17 formé par un procédé d'extrusion.
